# EUROPEAN PATENT APPLICATION

(11) **EP 4 563 431 A1**
(43) Date of publication of application: **04.06.2025**
(21) Application number: 22955413.4
(22) Date of filing: 19.08.2022
(51) Int. Cl.: B60W 30/182, B60R 16/023, H04W 52/02

(54) **CONTROL METHOD AND APPARATUS, AND VEHICLE**

(71) Applicant: Shenzhen Yinwang Intelligent Technologies Co., Ltd., Shenzhen, Guangdong 518129 (CN)
(72) Inventor: ZHU, Hualin, Shenzhen, Guangdong 518129 (CN); HONG, Miao, Shenzhen, Guangdong 518129 (CN); SUN, Yajie, Shenzhen, Guangdong 518129 (CN)
(74) Representative: Körber, Martin Hans
(86) International application number: PCT/CN2022/113744
(87) International publication number: WO 2024/036633

(57) **Abstract**

A control method and apparatus, and a vehicle are provided. The method includes: obtaining first configuration information, where the first configuration information is information obtained based on an operation of enabling or disabling a first function of a vehicle by a user; and controlling a working status of a first controller based on the first configuration information, where the working status includes a first working state and a second working state, the first controller enables the first function in the first working state, the first controller disables the first function in the second working state, and power consumption of the vehicle existing when the first controller is in the second working state is lower than power consumption of the vehicle existing when the first controller is in the first working state.

## Description

### TECHNICAL FIELD

Embodiments of this application relate to the field of intelligent vehicles, and more specifically, to a control method and apparatus, and a vehicle.

### BACKGROUND

As new energy vehicles are widely used in daily life, increasing attention is paid to endurance of the new energy vehicles. Currently, continuously improving energy supply infrastructure networks, increasing amounts of energy stored in the vehicles, reducing energy consumption power of the vehicles, and the like can alleviate range anxiety of new energy vehicle users to some extent. Reducing energy consumption power of the vehicles can directly increase endurance. However, reducing energy consumption power of the vehicles usually means performance degradation and function degradation of the vehicles, and consequently, it is difficult to maintain good user experience.

### SUMMARY

Embodiments of this application provide a control method and apparatus, and a vehicle, so that a driving requirement of a user can be taken into account after the vehicle enables or switches a driving mode, allowing a working status of the vehicle to be configured according to the driving requirement of the user.

According to a first aspect, a control method is provided. The method includes: obtaining first configuration information, where the first configuration information is information obtained based on an operation of enabling or disabling a first function of a vehicle by a user; and controlling a working status of a first controller based on the first configuration information, where the working status includes a first working state and a second working state, the first controller enables the first function in the first working state, the first controller disables the first function in the second working state, and power consumption of the vehicle existing when the first controller is in the second working state is lower than power consumption of the vehicle existing when the first controller is in the first working state.

Enabling the first function may be understood as that the first function may be used by the vehicle, or the first function of the vehicle is in an active state, or the vehicle is in a high power consumption state. In other words, after the first function is enabled, an overall energy consumption capability of the vehicle is improved. Disabling the first function may be understood as that the first function of the vehicle is in a sleep state, the first function is not activated, or the vehicle is in a low power consumption state. In other words, an overall energy consumption capability of the vehicle is reduced.

Optionally, the first function may be an automatic driving function or a driving assistance function of the vehicle. For example, the user may tap a corresponding control on a vehicle-mounted display to enable or disable the automatic driving function or the driving assistance function, and the first controller can obtain the first configuration information after detecting the operation of the user. In this case, enabling or disabling the automatic driving function or the driving assistance function may be enabling or disabling an overall automatic driving function or an overall driving assistance function of the vehicle, that is, the automatic driving function or the driving assistance function of the vehicle is available or unavailable. Alternatively, enabling or disabling the automatic driving function or the driving assistance function may be enabling or disabling some automatic driving functions or some driving assistance functions of the vehicle, that is, some automatic driving functions or some driving assistance functions of the vehicle are available, and the other functions are unavailable.

Optionally, when the automatic driving function or the driving assistance function is disabled, energy consumption of the controller is reduced. This helps prolong endurance. In addition, energy consumption of another system related to the automatic driving function or the driving assistance function, for example, a sensing system of the entire vehicle, is also reduced. This helps prolong endurance.

Optionally, the first function may alternatively be another high-energy-consuming function of the vehicle, for example, an air conditioner function, a seat heating function, or a radar function of the vehicle.

Optionally, functions of an automatic driving controller, a cockpit controller, and a vehicle control controller may be integrated into the first controller. The first controller can obtain the first configuration information and perform or disable the first function. In some implementations, an automatic driving controller, a cockpit controller, and a vehicle control controller are alternatively included inside the first controller. The cockpit controller or the vehicle control controller receives the first configuration information, and configures, based on content indicated by the first configuration information, the automatic driving controller to be in the first working state or the second working state.

Optionally, when the vehicle enables the second working state or switches a working status to the second working state, it may be understood as function degradation. For example, before the second working state is enabled, power consumption of an air conditioner of the vehicle is high and cooling effect is good, and after the second working state is enabled, power consumption of the air conditioner of the vehicle is reduced and cooling effect is poor.

In this embodiment of this application, the first controller can determine, based on selection of the user, whether to configure the first controller to be in the first working state or the second working state. In this way, a driving requirement of the user can be taken into account after the vehicle enables or switches a driving mode, allowing a working status of the vehicle to be configured according to the driving requirement of the user.

With reference to the first aspect, in some implementations of the first aspect, the method further includes: when a gear of the vehicle is a reverse gear, switching the first controller from the second working state to a third working state, where the first controller enables a reversing assistance function in the third working state.

In this embodiment of this application, if it is detected that the vehicle is in the reverse gear, the first controller can switch the second working state to the third working state, so that the first controller can implement the reversing assistance function, thereby avoiding unavailability of reversing assistance during reversing, and improving driving experience of the user.

With reference to the first aspect, in some implementations of the first aspect, the reversing assistance function includes at least one of the following: a reversing radar function, a panoramic view function, and a reversing view function.

With reference to the first aspect, in some implementations of the first aspect, the method further includes: informing the user that the reversing assistance function is enabled.

In this embodiment of this application, the first controller can provide a prompt for the user when performing the reversing assistance function, so that the user can better understand a status of the vehicle during reversing, thereby further improving the driving experience of the user.

With reference to the first aspect, in some implementations of the first aspect, the method further includes: when the gear of the vehicle is a parking gear, a neutral gear, or a drive gear, switching the first controller from the third working state to the second working state.

In this embodiment of this application, when the reversing ends, the first controller can switch the third working state to the second working state, so that an endurance capability of the vehicle can be improved after the reversing ends.

With reference to the first aspect, in some implementations of the first aspect, the method further includes: determining that the gear of the vehicle is the parking gear or the drive gear includes: determining that duration in which the gear of the vehicle is the parking gear or the drive gear is greater than or equal to a first threshold; or determining that the gear of the vehicle is the parking gear or the drive gear, and a traveling speed of the vehicle is greater than or equal to a second threshold.

For example, when it is detected that the duration in which the vehicle is in the parking gear or the drive gear is greater than or equal to 5 minutes, the first controller can control to switch the third working state to the second working state. For another example, when it is detected that the gear of the vehicle is the parking gear or the drive gear, and the traveling speed of the vehicle is greater than or equal to 40 km/h, the first controller can switch the third working state to the second working state.

In this embodiment of this application, a condition for determining that the gear of the vehicle is the parking gear or the drive gear is further set, so that the first controller switches the third working state to the second working state after the reversing ends.

It should be understood that the functions of the automatic driving controller, the cockpit controller, and the vehicle control controller are integrated into the first controller. The first controller can obtain the first configuration information and enable or disable the first function. The following describes an internal implementation of the first controller.

With reference to the first aspect, in some implementations of the first aspect, the first controller includes a second controller and a third controller. The second controller is configured to: obtain the first configuration information, and configure, based on the first configuration information, the third controller to be in the first working state or the second working state.

Optionally, the second controller is a cockpit controller or a vehicle control controller, and the third controller is an automatic driving controller.

In this embodiment of this application, the first controller includes two sub-controllers, namely, the second controller and the third controller. The second controller and the third controller may respectively receive instructions and enable or disable the first function.

With reference to the first aspect, in some implementations of the first aspect, the second controller may send third configuration information to the third controller, and the third controller configures, according to an indication of the third configuration information, the third controller to be in the first working state or the second working state.

With reference to the first aspect, in some implementations of the first aspect, when the first configuration information indicates the user to enable the first function and it is detected that a working status of the third controller is the first working state, the third configuration information is stopped from being sent to the third controller. Alternatively, when the first configuration information indicates the user to disable the first function and it is detected that a working status of the third controller is the second working state, the third configuration information is stopped from being sent to the second controller.

Optionally, the second controller may detect, by receiving an instruction from the third controller, that the third controller enables the first working state or the second working state.

In this embodiment of this application, the third controller may be automatically configured to be in the first working state or the second working state. When the second controller receives an instruction of the user for enabling the first function and detects that the third controller is configured to be in the first working state, the second controller may stop sending the third configuration information to the third controller. Alternatively, when the first controller receives an instruction of the user for disabling the first function and detects that the third controller is configured to be in the second working state, the second controller may stop sending the third configuration information to the third controller. In this way, signaling overheads of the first controller can be reduced, and the endurance capability of the vehicle can be further improved.

With reference to the first aspect, in some implementations of the first aspect, before the obtaining first configuration information, the method further includes: enabling an endurance mode.

In this embodiment of this application, after the vehicle enables the endurance mode, the first controller can determine, based on selection of the user, whether to configure the first controller to be in the first working state or the second working state. In this way, the driving requirement of the user is taken into account after the vehicle enables the endurance mode, allowing the working status of the vehicle to be configured according to the driving requirement of the user.

It should be understood that the endurance mode in this embodiment of this application may also be referred to as an extreme endurance mode, an ultimate energy saving mode, an ECO mode, an ECO+ mode, a long-distance mode, or the like. The foregoing terms are not limited in embodiments of this application. Any working mode of the vehicle that increases an endurance range by reducing power consumption belongs to the endurance mode in embodiments of this application.

With reference to the first aspect, in some implementations of the first aspect, the first function includes the automatic driving function.

According to a second aspect, a control method is provided. The method includes: obtaining a first energy consumption level, where the first energy consumption level is an energy consumption level of a vehicle in a non-endurance mode; obtaining a first instruction, where the first instruction instructs to enable an endurance mode; adjusting an energy consumption level of the vehicle from the first energy consumption level to a second energy consumption level in response to the first instruction, where the second energy consumption level is an energy consumption level of the vehicle in the endurance mode, and an energy consumption rate of the vehicle at the first energy consumption level is greater than an energy consumption rate of the vehicle at the second energy consumption level; obtaining a second instruction, where the second instruction instructs to exit the endurance mode; and adjusting the energy consumption level of the vehicle to the first energy consumption level in response to the second instruction.

Optionally, a user may tap a corresponding control on a vehicle-mounted display to enable the endurance mode, or the user may enable the endurance mode by sending voice information to a vehicle-mounted voice assistant.

Optionally, when the vehicle detects that a state of charge is insufficient to support the vehicle in arriving at a destination, the vehicle displays a prompt box on the vehicle-mounted display, to prompt the user to enable the endurance mode.

In this embodiment of this application, the first controller can obtain the first energy consumption level of the vehicle before enabling the endurance mode, and quickly adjust the energy consumption level of the vehicle to the first energy consumption level after exiting the endurance mode. In this way, driving comfort of the user can be further improved.

With reference to the second aspect, in some implementations of the second aspect, the adjusting the energy consumption level of the vehicle to the first energy consumption level includes at least one of the following content: adjusting a second air conditioner mode to a first air conditioner mode, adjusting a second energy regeneration gear state to a first energy regeneration gear state, adjusting a second air suspension state to a first air suspension state, adjusting a second vehicle speed limit to a first vehicle speed limit, and adjusting a second torque limit to a first torque limit.

There may be a specific relationship between an energy regeneration gear status and a driving mode of the vehicle, that is, an energy regeneration gear may correspond to one or more driving modes. For example, a first gear for energy regeneration may correspond to the endurance mode, and a second gear for energy regeneration may correspond to a normal traveling mode. Energy regeneration efficiency of the vehicle in the first gear is higher than energy regeneration efficiency of the vehicle in the second gear. For another example, a second gear for energy regeneration may correspond to both the endurance mode and a normal traveling mode.

Optionally, the first energy consumption level or the second energy consumption level or both further include one or more of the following: an on/off state of an air conditioner, an air conditioner setting temperature, a seat heating switch status, a seat heating gear status, a seat ventilation gear status, an on/off state of a blower, a blower gear status, a status of an atmosphere light, a head-up display switch status, a cockpit volume, brightness of a central control screen, a steering wheel heating status, a steering wheel heating gear, and the driving mode.

In this embodiment of this application, before the vehicle enables the endurance mode, the first controller can obtain an energy consumption level of the vehicle, for example, an air conditioner status, an energy regeneration gear, an air suspension status, a vehicle speed limit, and a torque limit. After the vehicle exits the endurance mode, the first controller can control the vehicle to quickly restore to the energy consumption level existing before the endurance mode is enabled, that is, quickly restore the air conditioner status, the energy regeneration gear, the air suspension status, the vehicle speed limit, and the torque limit, to further improve driving experience of the user.

With reference to the second aspect, in some implementations of the second aspect, that the second instruction instructs to exit the endurance mode includes: The second instruction instructs to exit the endurance mode when the state of charge of a battery of the vehicle is greater than or equal to a first battery level or a remaining range of the vehicle is greater than or equal to a first range.

For example, when the state of charge of the vehicle is greater than or equal to 10%, the first controller may control the vehicle to exit the endurance mode. For another example, when the remaining traveling range of the vehicle is greater than 50 kilometers, the first controller may control the vehicle to exit the endurance mode.

According to a third aspect, a control method is provided. The method includes: obtaining a first traveling speed of a vehicle; adjusting the first traveling speed of the vehicle to a second traveling speed when the first traveling speed is greater than a first speed threshold, where the second traveling speed is less than the first speed threshold; and enabling an endurance mode.

For example, the first speed threshold is set to 80 km/h, and a first controller may control the endurance mode to be enabled when a traveling speed of the vehicle is less than 80 km/h.

Optionally, adjusting the first traveling speed to the second traveling speed may be: informing, on a vehicle-mounted display, a user that the traveling speed of the vehicle is excessively high, and reminding the user to adjust an opening degree of an acceleration pedal to decelerate, to adjust the traveling speed of the vehicle to the second traveling speed.

Optionally, adjusting the first traveling speed to the second traveling speed may be: informing, on a vehicle-mounted display, a user that the traveling speed of the vehicle is excessively high, asking the user whether to agree to adjust the vehicle speed to the first traveling speed, and after obtaining consent of the user, the first controller controls the vehicle speed of the vehicle to be adjusted to the second traveling speed.

In this embodiment of this application, when the vehicle speed of the vehicle is excessively high, the first controller may reduce the first traveling speed of the vehicle, to ensure that the vehicle safely enters the endurance mode.

With reference to the third aspect, in some implementations of the third aspect, the method further includes: prompting the user to reduce the first traveling speed.

A manner of prompting the user to reduce the first traveling speed may be: displaying a prompt box on the vehicle-mounted display to prompt the user to reduce the vehicle speed, or prompting, through voice from a vehicle-mounted speaker, the user to reduce the vehicle speed.

In this embodiment of this application, when the vehicle speed is excessively high, the first controller can prompt the user to reduce the traveling speed of the vehicle, so that the vehicle can safely enter the endurance mode.

According to a fourth aspect, a control apparatus is provided. The apparatus includes: an obtaining unit, configured to: obtain first configuration information, where the first configuration information is information obtained based on an operation of enabling or disabling a first function of a vehicle by a user; and a processing unit, configured to: control a working status of a first controller based on the first configuration information, where the working status includes a first working state and a second working state, the first controller enables the first function in the first working state, the first controller disables the first function in the second working state, and power consumption of the vehicle existing when the first controller is in the second working state is lower than power consumption of the vehicle existing when the first controller is in the first working state.

With reference to the fourth aspect, in some implementations of the fourth aspect, the processing unit is further configured to: when a gear of the vehicle is a reverse gear, switch the first controller from the second working state to a third working state, where the first controller enables a reversing assistance function in the third working state.

With reference to the fourth aspect, in some implementations of the fourth aspect, the reversing assistance function includes at least one of the following: a reversing radar function, a panoramic view function, and a reversing view function.

With reference to the fourth aspect, in some implementations of the fourth aspect, the processing unit is further configured to inform the user that the reversing assistance function is enabled.

With reference to the fourth aspect, in some implementations of the fourth aspect, the processing unit is further configured to: when the gear of the vehicle is a parking gear, a neutral gear, or a drive gear, switch the first controller from the third working state to the second working state.

With reference to the fourth aspect, in some implementations of the fourth aspect, that the processing unit is further configured to determine that the gear of the vehicle is the parking gear or the drive gear includes: determining that duration in which the gear of the vehicle is the parking gear or the drive gear is greater than or equal to a first threshold; or determining that the gear of the vehicle is the parking gear or the drive gear, and a traveling speed of the vehicle is greater than or equal to a second threshold.

With reference to the fourth aspect, in some implementations of the fourth aspect, the processing unit is further configured to enable an endurance mode.

With reference to the fourth aspect, in some implementations of the fourth aspect, the first function includes an automatic driving function.

According to a fifth aspect, a control apparatus is provided. The apparatus includes: an obtaining unit, configured to: obtain a first energy consumption level, where the first energy consumption level is an energy consumption level of a vehicle in a non-endurance mode, and the obtaining unit is further configured to: obtain a first instruction, where the first instruction instructs to enable an endurance mode; and a processing unit, further configured to: adjust an energy consumption level of the vehicle from the first energy consumption level to a second energy consumption level in response to the first instruction, where the second energy consumption level is an energy consumption level of the vehicle in the endurance mode, and an energy consumption rate of the vehicle at the first energy consumption level is greater than an energy consumption rate of the vehicle at the second energy consumption level; the obtaining unit is further configured to: obtain a second instruction, where the second instruction instructs to exit the endurance mode; and the processing unit is further configured to adjust the energy consumption level of the vehicle to the first energy consumption level in response to the second instruction.

With reference to the fifth aspect, in some implementations of the fifth aspect, the processing unit is specifically configured to perform at least one of the following content: adjusting a second air conditioner mode to a first air conditioner mode, adjusting a second energy regeneration gear state to a first energy regeneration gear state, adjusting a second air suspension state to a first air suspension state, adjusting a second vehicle speed limit to a first vehicle speed limit, and adjusting a second torque limit to a first torque limit.

Optionally, the first energy consumption level or the second energy consumption level or both further include one or more of the following: an on/off state of an air conditioner, an air conditioner setting temperature, a seat heating switch status, a seat heating gear status, a seat ventilation gear status, an on/off state of a blower, a blower gear status, a status of an atmosphere light, a head-up display switch status, a cockpit volume, brightness of a central control screen, a steering wheel heating status, a steering wheel heating gear, and a driving mode.

With reference to the fifth aspect, in some implementations of the fifth aspect, that the second instruction instructs to exit the endurance mode includes: The second instruction instructs the processing unit to specifically exit the endurance mode when a state of charge of a battery of the vehicle is greater than or equal to a first battery level or a remaining range of the vehicle is greater than or equal to a first range.

According to a sixth aspect, a control apparatus is provided. The apparatus includes: an obtaining unit, configured to obtain a first traveling speed of a vehicle; and a processing unit, configured to: adjust the first traveling speed of the vehicle to a second traveling speed when the first traveling speed is greater than a first speed threshold, where the second traveling speed is less than the first speed threshold, and the processing unit is further configured to enable an endurance mode.

With reference to the sixth aspect, in some implementations of the sixth aspect, the processing unit is further configured to prompt a user to reduce the first traveling speed.

According to a seventh aspect, a control apparatus is provided. The apparatus includes at least one processor and a memory. The at least one processor is coupled to the memory, and is configured to read and execute instructions in the memory. The apparatus is configured to perform the methods according to the foregoing aspects.

According to an eighth aspect, a computer-readable medium is provided. The computer-readable medium stores program code. When the computer program code is run on a computer, the computer is enabled to perform the methods according to the foregoing aspects.

According to a ninth aspect, a chip is provided. The chip includes at least one processor and a memory. The at least one processor is coupled to the memory, and is configured to read and execute instructions in the memory. An apparatus is configured to perform the methods according to the foregoing aspects.

According to a tenth aspect, a computer program product is provided. The computer product includes a computer program. When the computer program is run, a computer is enabled to perform the methods according to the foregoing aspects.

According to an eleventh aspect, a vehicle is provided. The vehicle includes at least one processor and a memory. The at least one processor is coupled to the memory, and is configured to read and execute instructions in the memory. The vehicle is configured to perform the methods according to the foregoing aspects.

It should be understood that the vehicle (sometimes referred to as a car for short) in this application is a vehicle in a broad sense, and may be a transport means (for example, an automobile, a truck, a motorcycle, a train, an airplane, or a ship), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not limited in this application.

The control method provided in embodiments of this application can achieve the following technical effect: The first controller of the vehicle can obtain the first configuration information, and the first configuration information can indicate the first controller to be configured to be in the first working state or the second working state. In this way, the driving requirement of the user can be taken into account when the driving mode is enabled or switched, so that the first function can be enabled or disabled according to the driving requirement of the user. In addition, in the control method provided in embodiments of this application, the first energy consumption level of the vehicle can be further obtained before the endurance mode is enabled, and after the endurance mode is exited, the energy consumption level of the vehicle is quickly restored to the first energy consumption level. In this way, driving comfort of the user can be further improved. In addition, in the control method provided in embodiments of this application, when the vehicle speed of the vehicle is excessively high, the traveling speed of the vehicle can be further controlled to be reduced, to ensure that the vehicle safely enters the endurance mode.

### BRIEF DESCRIPTION OF DRAWINGS

FIG. 1 is a functional diagram of a carrier according to an embodiment of this application;
FIG. 2 shows a system architecture to which a control method is applicable according to an embodiment of this application;
FIG. 3 is a schematic flowchart of a control method according to an embodiment of this application;
FIG. 4(a) to FIG. 4(g) are a diagram of an application scenario to which a control method is applicable according to an embodiment of this application;
FIG. 5A to FIG. 5G are a schematic flowchart of another control method according to an embodiment of this application;
FIG. 6A and FIG. 6B are a schematic flowchart of another control method according to an embodiment of this application;
FIG. 7A to FIG. 7F are a schematic flowchart of another control method according to an embodiment of this application;
FIG. 8 is a schematic flowchart of another control method according to an embodiment of this application;
FIG. 9 is a schematic flowchart of another control method according to an embodiment of this application;
FIG. 10 is a schematic flowchart of another control method according to an embodiment of this application;
FIG. 11 is a diagram of a control apparatus according to an embodiment of this application; and
FIG. 12 is a diagram of another control apparatus according to an embodiment of this application.

### DESCRIPTION OF EMBODIMENTS

The following describes technical solutions of embodiments in this application with reference to accompanying drawings.

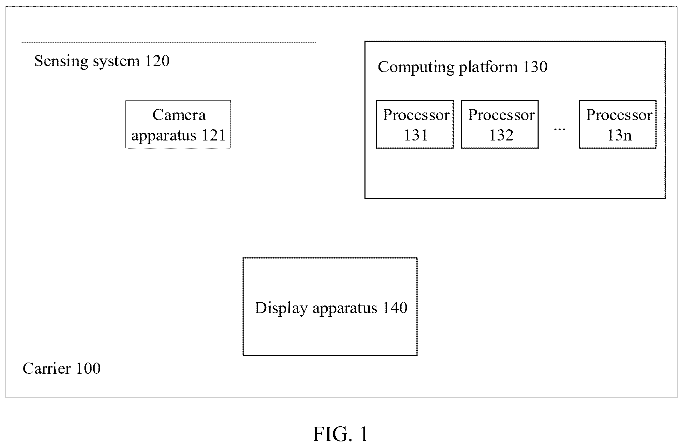

To facilitate understanding, the following describes, with reference to FIG. 1 by using an intelligent driving scenario as an example, a scenario to which embodiments of this application are applicable.

FIG. 1 is a functional diagram of a carrier 100 according to an embodiment of this application. It should be understood that FIG. 1 and related descriptions are merely examples, and do not limit the carrier in embodiments of this application.

In an implementation process, the carrier 100 may be configured to be in a fully or partially automatic driving mode, or may be manually driven by a user. For example, the carrier 100 may obtain information about an ambient environment of the carrier 100 by using a sensing system 120, and obtain an automatic driving policy based on analysis of the information about the ambient environment to implement fully automatic driving, or present an analysis result to the user to implement partially automatic driving.

The carrier 100 may include a plurality of subsystems, for example, the sensing system 120, a computing platform 130, and a display apparatus 140. Optionally, the carrier 100 may include more or fewer subsystems, and each subsystem may include one or more components. In addition, all subsystems and components of the carrier 100 may be interconnected in a wired or wireless manner.

The sensing system 120 may include several types of sensors that sense the information about the ambient environment of the carrier 100. For example, the sensing system 120 may include a positioning system. The positioning system may be a global positioning system (global positioning system, GPS), a BeiDou system, or another positioning system. The sensing system 120 may include one or more of the following: an inertial measurement unit (inertial measurement unit, IMU), a lidar, a millimeter-wave radar, an ultrasonic radar, and a camera apparatus 121.

The camera apparatus 121 may be configured to capture image information about the ambient environment of the carrier 100. The camera apparatus 121 may include a monocular camera, a binocular camera, a structured light camera, a panoramic camera, and the like, and the image information obtained by the camera apparatus 121 may include static image information, and may also include video stream information. The image information may be stored in a form of image or video, or may be stored in a form of image parameter or video parameter, for example, parameter information such as brightness, grayscale, color distribution, contrast, and pixel of an image.

Some or all of functions of the carrier 100 may be controlled by the computing platform 130. The computing platform 130 may include processors 131 to 13n (n is a positive integer). The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory to execute the instructions, to implement a corresponding function.

The computing platform 130 may control the functions of the carrier 100 based on inputs received from various subsystems (for example, the sensing system 120). In some embodiments, the computing platform 130 may operate to control many aspects of the carrier 100 and the subsystems of the carrier 100.

Optionally, the foregoing components are merely examples. During actual application, the components in the foregoing modules may be added or removed according to an actual requirement. FIG. 1 should not be construed as a limitation on embodiments of this application.

The carrier 100 moving on a road may recognize an object in the ambient environment of the carrier 100 to determine an adjustment to a current speed. The object may be another vehicle, a traffic control device, or another type of object. In some examples, each recognized object may be taken into account independently, and a speed to be adjusted to by an automatic driving vehicle may be determined based on features of the object, for example, a current speed and an acceleration of the object, and a spacing between the object and the vehicle.

Optionally, the carrier 100 or a sensing and computing device (for example, the computing platform 130) associated with the carrier 100 may predict a behavior of the recognized object based on features of the recognized object and a state (for example, traffic, rain, and ice on the road) of the ambient environment. Optionally, all recognized objects depend on a behavior of each other. Therefore, all the recognized objects may be taken into account together to predict a behavior of a single recognized object. The carrier 100 can adjust the speed of the carrier 100 based on the predicted behavior of the recognized object. In other words, the carrier 100 can determine, based on the predicted behavior of the object, a stable state (for example, acceleration, deceleration, or stop) to which the vehicle needs to be adjusted. In this process, another factor may also be taken into account to determine the speed of the carrier 100, for example, a lateral position of the carrier 100 on the road on which the carrier 100 travels, a curvature of the road, and proximity between a static object and a dynamic object.

The carrier 100 in this application may include a road transportation means, a water transportation means, an air transportation means, an industrial device, an agricultural device, an entertainment device, or the like. For example, the carrier may be a vehicle. The vehicle is a vehicle in a broad sense, and may be a transportation means (such as a commercial vehicle, a passenger vehicle, a motorcycle, a flight vehicle, or a train), an industrial vehicle (such as a pallet truck, a trailer, or a tractor), an engineering vehicle (such as an excavator, a bulldozer, or a crane), an agricultural device (such as a lawn mower or a harvester), a recreation device, a toy vehicle, or the like. A type of the vehicle is not specifically limited in embodiments of this application. For another example, the carrier may be a transportation means such as an aircraft or a ship.

The following uses an example in which the carrier is a vehicle to describe a technical problem that needs to be resolved in this application and the technical solutions used in this application.

As new energy vehicles are widely used in daily life, increasing attention is paid to endurance of the new energy vehicles. Currently, continuously improving energy supply infrastructure networks, increasing amounts of energy stored in vehicles, reducing energy consumption power of vehicles, and the like can alleviate range anxiety of new energy vehicle users to some extent. Reducing energy consumption power of vehicles can directly increase endurance. However, reducing energy consumption power of vehicles usually means performance degradation and function degradation of vehicles, and consequently, it is difficult to maintain good user experience.

Embodiments of this application provide a control method and apparatus, and a vehicle, so that a driving requirement of a user can be taken into account after the vehicle enables or switches a driving mode, allowing a working status of the vehicle to be configured according to a driving requirement of the user.

Before the control method provided in embodiments of this application is described, a system architecture to which the control method is applicable is first described.

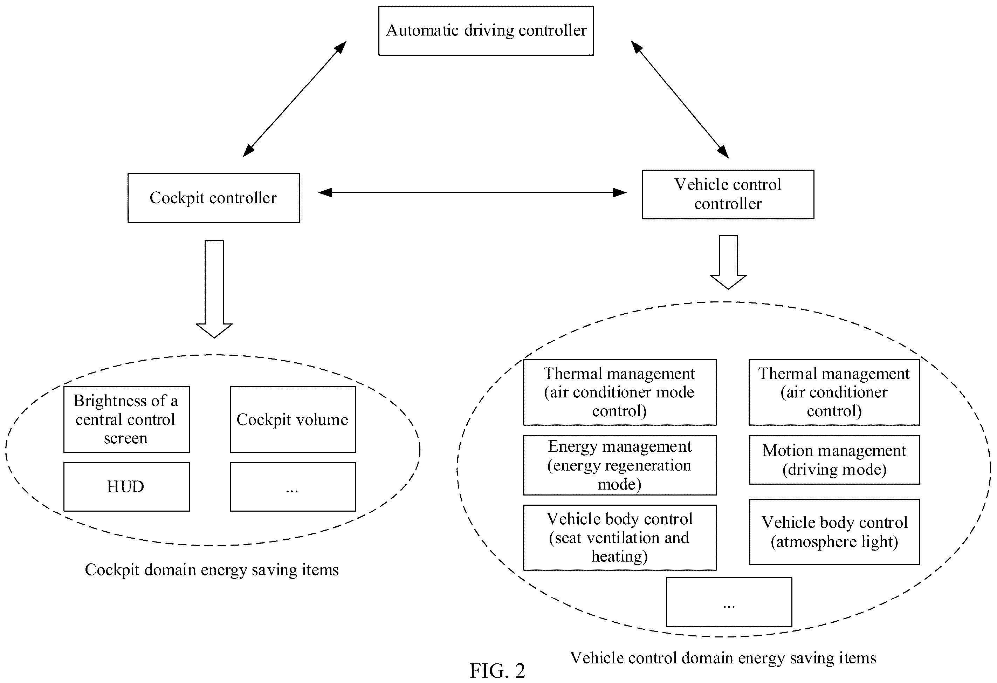

FIG. 2 is the system architecture to which the control method is applicable according to an embodiment of this application. The system architecture may be applied to the carrier 100 in FIG. 1.

The system architecture may include an automatic driving controller, a cockpit controller, and a vehicle control controller. The automatic driving controller may be responsible for an automatic driving function of the vehicle. For example, the automatic driving controller may provide one or more of the following: traveling path planning, multi-sensor fusion, and automatic driving control functions for the vehicle. The cockpit controller may be responsible for controlling a device in a cockpit, for example, controlling one or more of the following: central control screen interaction, head-up display, and voice interaction of the vehicle. The vehicle control controller can perform one or more of the following: vehicle motion control, thermal management, vehicle body control, and energy management, for example, controlling an air conditioner mode of the vehicle to be enabled or disabled, controlling a vehicle atmosphere light to be turned on or off, or controlling ventilation and heating functions of a seat to be enabled or disabled.

It should be understood that terms of the foregoing controllers are not limited in embodiments of this application. Any controller that can implement the foregoing functions belongs to the automatic driving controller, the cockpit controller, or the vehicle control controller in embodiments of this application.

It should be further understood that the system architecture shown in FIG. 2 is merely an example of this application. A person skilled in the art may change the system architecture based on an electronic and electrical architecture of a vehicle manufacturer. The system architecture shown in FIG. 2 should not be understood as a limitation on the system architecture to which the control method is applicable.

It should be further understood that the cockpit controller, the automatic driving controller, and the vehicle controller in FIG. 2 may be integrated into one controller, and the controller implements functions of the foregoing three controllers.

It should be further understood that any controller that includes any one of the following automatic driving functions in the vehicle belongs to the automatic driving controller in embodiments of this application: a map function, a navigation function, a full-speed adaptive cruise control (adaptive cruise control, ACC) function, an integrated adaptive cruise control (integrated adaptive cruise control, IACC) function, a lane departure warning (lane departure warning, LDW) function, a lane keeping assist (lane keeping assist, LKA) function, a traffic sign recognition (traffic sign recognition system, TSRS) function, a forward collision warning (forward collision warning, FCW) function, an autonomous emergency braking (autonomous emergency braking, AEB) function, a blind spot detection function, a lane change assistance (lane change assistance, LCA) function, a rear collision warning (rear collision warning, RCW) function, a driver lane change (driver lane change, DLC) function, a smart pilot assist function, a front cross traffic warning (front cross traffic warning, FCTW) function, a front cross traffic brake (front cross traffic brake, FCTB) function, a rear cross traffic alert (rear cross traffic alert, RCTA) function, a rear cross traffic brake (rear cross traffic brake, RCTB) function, a vehicle start reminder function, a reversing radar function, an automatic parking function, a panoramic view function, a 360-degree panoramic calibration function, a transparent vehicle body function, a driving record function, a reversing view function, and a blind spot detection function.

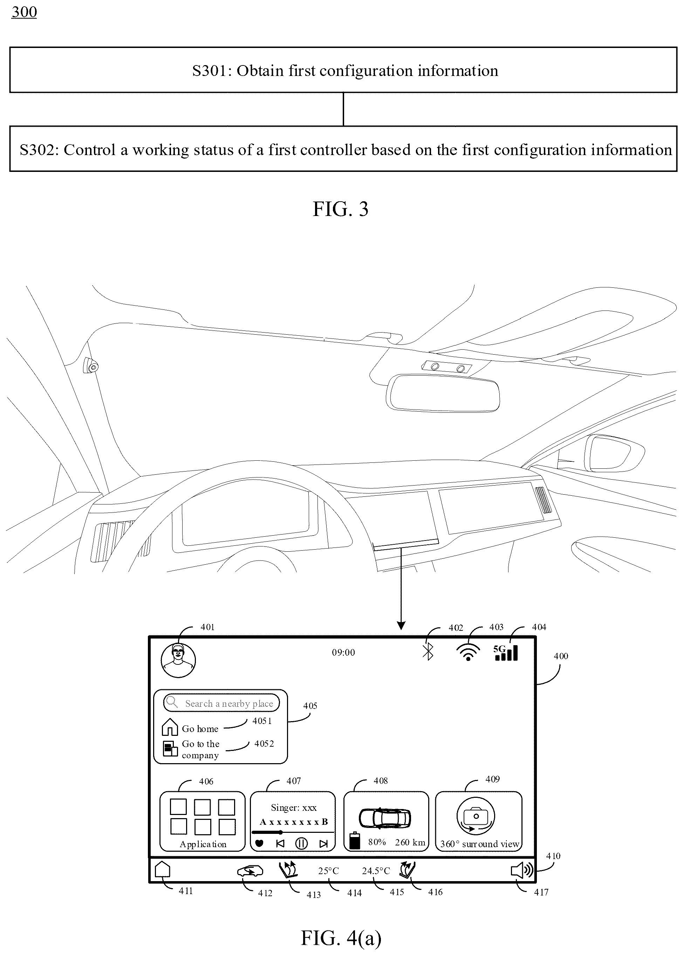

FIG. 3 is a schematic flowchart of a control method according to an embodiment of this application. A method 300 may include the following steps.

S301: Obtain first configuration information.

The first configuration information is information obtained based on an operation of enabling or disabling a first function of a vehicle by a user.

Optionally, enabling the first function may be understood as that the first function may be used by the vehicle, or the first function of the vehicle is in an active state, or the vehicle is in a high power consumption state. In other words, after the first function is enabled, an overall energy consumption capability of the vehicle is improved. Disabling the first function may be understood as that the first function of the vehicle is in a sleep state, the first function is not activated, or the vehicle is in a low power consumption mode. In other words, an overall energy consumption capability of the vehicle is reduced.

Optionally, the first function may be an automatic driving function or a driving assistance function of the vehicle. For example, the user may tap a corresponding control on a vehicle-mounted display to enable or disable the automatic driving function or the driving assistance function, and a first controller can obtain the first configuration information after detecting the operation of the user. In this case, enabling or disabling the automatic driving function or the driving assistance function may be enabling or disabling an overall automatic driving function or an overall driving assistance function of the vehicle, that is, the automatic driving function or the driving assistance function of the vehicle is available or unavailable. Alternatively, enabling or disabling the automatic driving function or the driving assistance function may be enabling or disabling some automatic driving functions or some driving assistance functions of the vehicle, that is, some automatic driving functions or some driving assistance functions of the vehicle are available, and the other functions are unavailable.

Optionally, when the automatic driving function or the driving assistance function is disabled, energy consumption of the controller is reduced. This helps prolong endurance. In addition, energy consumption of another system related to the automatic driving function or the driving assistance function, for example, a sensing system of the entire vehicle, is also reduced. This helps prolong endurance.

Optionally, the first function may alternatively be another high-energy-consuming function of the vehicle, for example, an air conditioner function, a seat heating function, or a radar function of the vehicle.

S302: Control a working status of the first controller based on the first configuration information.

The working status includes a first working state and a second working state. Power consumption of the vehicle existing when the first controller is in the second working state is lower than power consumption of the vehicle existing when the first controller is in the first working state. The first controller enables the first function in the first working state, and the first controller disables the first function in the second working state.

Optionally, functions of an automatic driving controller, a cockpit controller, and a vehicle control controller may be integrated into the first controller. The first controller can obtain the first configuration information and perform or disable the first function. In some implementations, an automatic driving controller, a cockpit controller, and a vehicle control controller are alternatively included inside the first controller. The cockpit controller or the vehicle control controller receives the first configuration information, and configures, based on content indicated by the first configuration information, the automatic driving controller to be in the first working state or the second working state.

Optionally, when the vehicle enables the second working state or switches the working status to the second working state, it may be understood as function degradation. For example, before the second working state is enabled, power consumption of an air conditioner of the vehicle is high and cooling effect is good, and after the second working state is enabled, power consumption of the air conditioner of the vehicle is reduced and cooling effect is poor.

In this embodiment of this application, the first controller can determine, based on selection of the user, whether to configure the first controller to be in the first working state or the second working state. In this way, a driving requirement of the user can be taken into account after the vehicle enables or switches a driving mode, allowing a working status of the vehicle to be configured according to the driving requirement of the user.

In a possible implementation, the method further includes: when a gear of the vehicle is a reverse gear, switching the first controller from the second working state to a third working state, where the first controller can enable a reversing assistance function in the third working state.

In this embodiment of this application, if it is detected that the vehicle is in the reverse gear, the first controller can switch the second working state to the third working state, so that the first controller can implement the reversing assistance function, thereby avoiding unavailability of reversing assistance during reversing, and improving driving experience of the user.

In a possible implementation, the reversing assistance function includes at least one of the following: a reversing radar function, a panoramic view function, and a reversing view function.

In a possible implementation, the method further includes: informing the user that the reversing assistance function is enabled.

In this embodiment of this application, the first controller can provide a prompt for the user when performing the reversing assistance function, so that the user can better understand a status of the vehicle during reversing, thereby further improving the driving experience of the user.

In a possible implementation, the method further includes: when the gear of the vehicle is a parking gear, a neutral gear, or a drive gear, switching the first controller from the third working state to the second working state.

In this embodiment of this application, when the reversing ends, the first controller can switch the third working state to the second working state, so that an endurance capability of the vehicle can be improved after the reversing ends.

In a possible implementation, the method further includes: determining that the gear of the vehicle is the parking gear or the drive gear includes: determining that duration in which the gear of the vehicle is the parking gear or the drive gear is greater than or equal to a first threshold; or determining that the gear of the vehicle is the parking gear or the drive gear, and a traveling speed of the vehicle is greater than or equal to a second threshold.

For example, when the duration in which the vehicle is in the parking gear or the drive gear is greater than or equal to 5 minutes, the first controller can control to switch the third working state to the second working state. For another example, when the gear of the vehicle is the parking gear or the drive gear, and the traveling speed of the vehicle is greater than or equal to 40 km/h, the first controller can switch the third working state to the second working state.

In this embodiment of this application, a condition for determining that the gear of the vehicle is the parking gear or the drive gear is further set, so that the first controller switches the third working state to the second working state after the reversing ends.

It should be understood that the functions of the automatic driving controller, the cockpit controller, and the vehicle control controller are integrated into the first controller. The first controller can obtain the first configuration information and perform or disable the first function. The following describes an internal implementation of the first controller.

In a possible implementation, the first controller includes a second controller and a third controller. The second controller is configured to: obtain the first configuration information, and configure, based on the first configuration information, the third controller to be in the first working state or the second working state.

Optionally, the second controller is a cockpit controller or a vehicle control controller, and the third controller is an automatic driving controller.

In this embodiment of this application, the first controller includes two sub-controllers, namely, the second controller and the third controller. The second controller and the third controller may respectively receive instructions and enable or disable the first function.

In a possible implementation, the second controller may send third configuration information to the third controller, and the third controller configures, according to an indication of the third configuration information, the third controller to be in the first working state or the second working state.

In a possible implementation, when the first configuration information indicates the user to enable the first function and it is detected that a working status of the third controller is the first working state, the third configuration information is stopped from being sent to the third controller. Alternatively, when the first configuration information indicates the user to disable the first function and it is detected that a working status of the third controller is the second working state, the third configuration information is stopped from being sent to the second controller.

Optionally, the second controller may detect, by receiving an instruction from the third controller, that the third controller enables the first working state or the second working state.

In this embodiment of this application, the third controller may be automatically configured to be in the first working state or the second working state. When the second controller receives an instruction of the user for enabling the first function and detects that the third controller is configured to be in the first working state, the second controller may stop sending the third configuration information to the third controller. Alternatively, when the first controller receives an instruction of the user for disabling the first function and detects that the third controller is configured to be in the second working state, the second controller may stop sending the third configuration information to the third controller. In this way, signaling overheads of the first controller can be reduced, and the endurance capability of the vehicle can be further improved.

In a possible implementation, before the obtaining first configuration information, the method further includes: enabling an endurance mode.

The endurance mode may also be referred to as an extreme endurance mode, an ultimate energy saving mode, an ECO mode, an ECO+ mode, or a long-distance mode. The endurance mode in this application may alternatively be another mode that enables the user to obtain a longer endurance range.

In this embodiment of this application, after the vehicle enables the endurance mode, the first controller can determine, based on selection of the user, whether to configure the first controller to be in the first working state or the second working state. In this way, the driving requirement of the user is taken into account after the vehicle enables the endurance mode, allowing the working status of the vehicle to be configured according to the driving requirement of the user.

In a possible implementation, the first function includes an automatic driving function.

It should be understood that the endurance mode in this embodiment of this application may also be referred to as the extreme endurance mode, the ultimate energy saving mode, the ECO mode, the ECO+ mode, the long-distance mode, or the like. The foregoing terms are not limited in embodiments of this application. Any working mode of the vehicle that increases the endurance range by reducing power consumption belongs to the extreme endurance mode or the endurance mode in embodiments of this application.

FIG. 4(a) to FIG. 4(g) are a diagram of an application scenario of a control method according to an embodiment of this application. The diagram of the application scenario may be an application scenario to which the method 300 is applicable.

As shown in FIG. 4(a), when a vehicle is in a normal driving state, a central control large screen of the vehicle displays an interface 400 and a function bar 410. The display interface 400 includes user account login information 401, a Bluetooth function icon 402, a Wi-Fi function icon 403, a cellular network signal icon 404, a vehicle-mounted map application search box 405, a card 406 for switching to display all applications installed on the vehicle, a card 407 for switching to display a vehicle-mounted music application, a card 408 for displaying a state of charge of the vehicle and a remaining traveling range, and a card 409 for displaying a 360-degree (°) surround view function of the vehicle. The vehicle-mounted map application search box 405 may include a Go home control 4051 and a Go to the company control 4052 that are set by a user. The function bar 410 includes an icon 411 for switching to display a desktop of the central control large screen, a vehicle internal circulation icon 412, and a driver seat heating function icon 413, a driver-area air conditioner temperature display icon 414, a front passenger-area air conditioner temperature display icon 415, a front passenger seat heating function icon 416, and a volume setting icon 417.

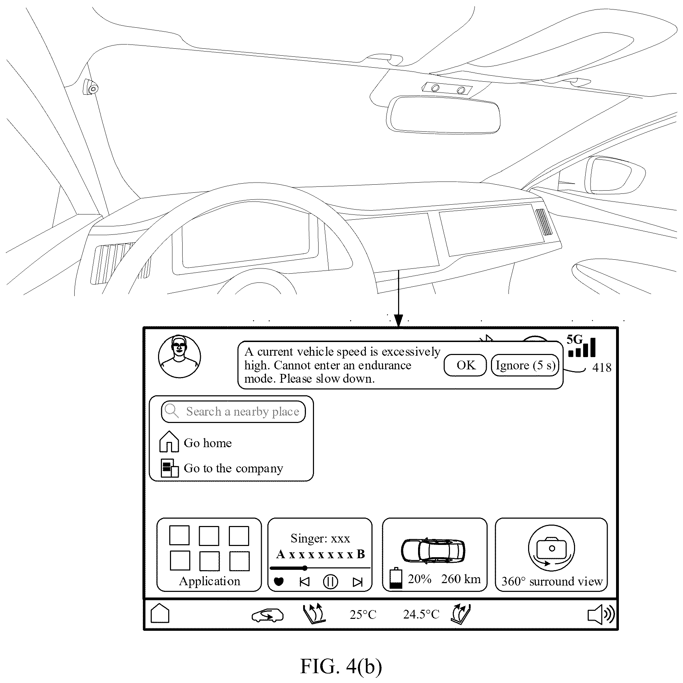

As shown in FIG. 4(b), when the state of charge of the vehicle is insufficient or the remaining traveling range is excessively short, the vehicle may detect whether a current vehicle speed is greater than or equal to a preset threshold. If the vehicle detects that the current vehicle speed is greater than or equal to the preset threshold, the vehicle may send prompt information 418 to the user on the display interface 400 of the vehicle. The prompt information 418 is used to inform the user that the current vehicle speed is excessively high and an endurance mode cannot be entered.

For example, when the state of charge of the vehicle is less than 10% or the remaining traveling range is less than 50 kilometers, the vehicle may detect whether a current vehicle speed is greater than or equal to 80 kilometers/hour. If the vehicle speed is greater than 80 kilometers/hour, prompt information 418 may be sent to the user on the display interface of the vehicle, to inform the user that the current traveling speed of the vehicle is excessively high and an endurance mode cannot be entered.

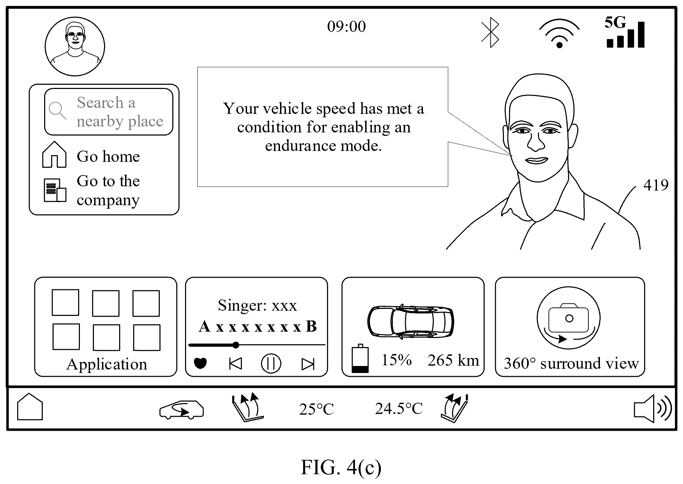

As shown in FIG. 4(c), after the user decreases the vehicle speed, the vehicle detects that a reduced vehicle speed is less than the preset threshold. In this case, voice information may be sent on the display interface 400 of the vehicle by using a voice assistant 419, to inform the user that the endurance mode may be entered. The user may enable the endurance mode in a setting option of the application 406 based on a prompt of the voice information.

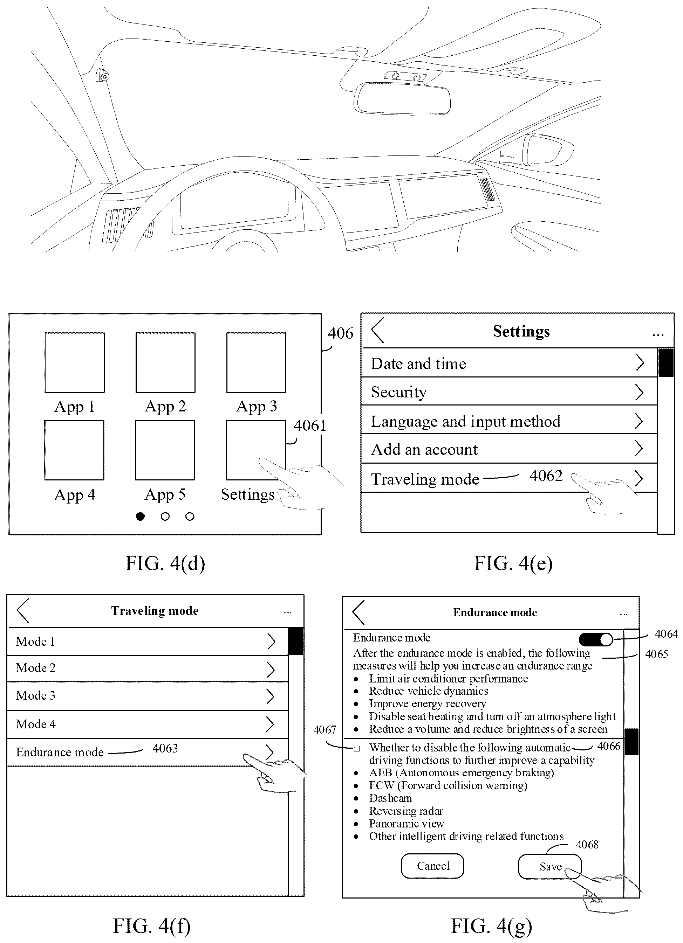

Optionally, a manner of sending the voice information to inform the user that the vehicle speed meets a requirement for enabling the endurance mode may be replaced with a manner of displaying prompt information on the display interface 400. The user may directly enter, based on an option in the prompt information, an interface shown in FIG. 4(e).

Optionally, when the current vehicle speed is less than the preset threshold, the vehicle also automatically enters the endurance mode without confirmation of the user.

For example, when the current vehicle speed of the vehicle is less than 80 kilometers/hour, the vehicle sends voice information to the user, to notify the user of reducing a traveling speed of the vehicle, or the vehicle may automatically reduce a traveling speed and automatically enter the endurance mode without confirmation of the user.

As shown in FIG. 4(d), a graphical user interface (graphical user interface, GUI) is the desktop displayed on the central control large screen of the vehicle, and the desktop includes icons of a plurality of applications and a setting icon 4061. When the vehicle detects an operation of tapping the icon 4061 by the user, the vehicle may display a GUI shown in FIG. 4(e).

As shown in the GUI shown in FIG. 4(e), the GUI is a function setting interface. The function setting interface includes setting options of date and time, security, language and input method, add an account, and traveling mode 4062. When the vehicle detects an operation of tapping the option of traveling mode 4062 by the user, the vehicle may display a GUI shown in FIG. 4(f).

As shown in the GUI shown in FIG. 4(f), the GUI is a traveling mode setting interface. The traveling mode setting interface includes modes 1 to 4 and the endurance mode. The modes 1 to 4 may be driving modes parallel to the endurance mode. For example, the modes 1 to 4 may be an accelerated traveling mode, a normal traveling mode, a violent mode, a comfort mode, a sandy mode, a racing mode, and the like. The user may set a traveling mode of the vehicle by tapping any mode on the traveling mode setting interface. When the vehicle detects that the user taps the endurance mode, the vehicle may display a GUI shown in FIG. 4(g).

As shown in the GUI shown in FIG. 4(g), the GUI is an endurance mode setting interface. The endurance mode setting interface may include an endurance mode control 4064, a description text 4065, a description text 4066, an option 4067, and a save control 4068. The user may enable or disable the endurance mode of the vehicle by tapping the endurance mode control 4064. After the endurance mode is enabled, the vehicle can improve an endurance capability of the vehicle by limiting air conditioner performance, reducing vehicle dynamics, improving an energy regeneration capability, disabling seat heating, turning off an atmosphere light, reducing a volume of a speaker of the vehicle, and reducing brightness of a vehicle display. The user may select the option 4067 to further improve the endurance capability of the vehicle, which includes: disabling an autonomous emergency braking function of the vehicle, disabling a forward collision warning function of the vehicle, disabling a driving record function, disabling a reversing radar function, disabling a holographic view function, and disabling other automatic driving related functions.

After completing the foregoing settings, the user may tap the save control 4068 to save the related settings.

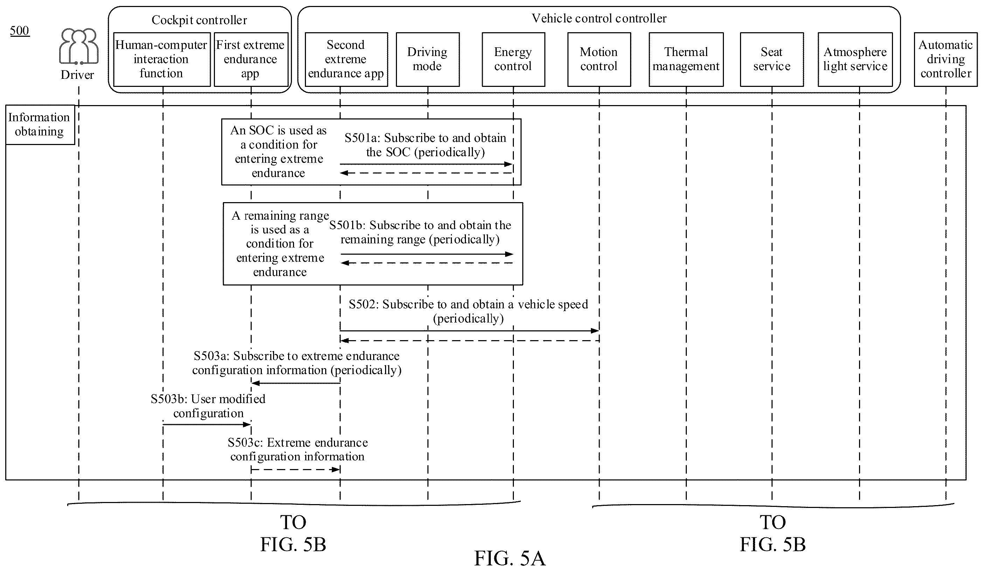

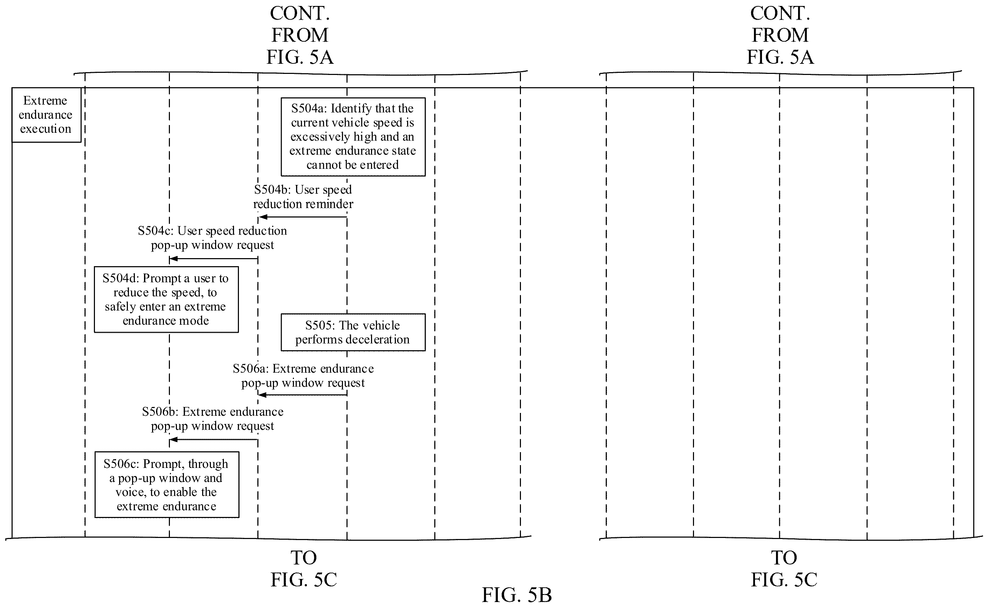

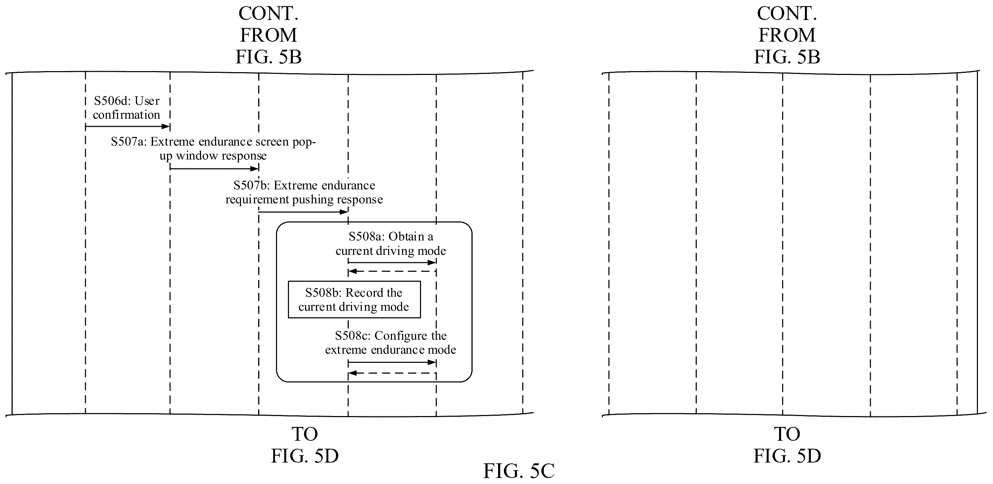

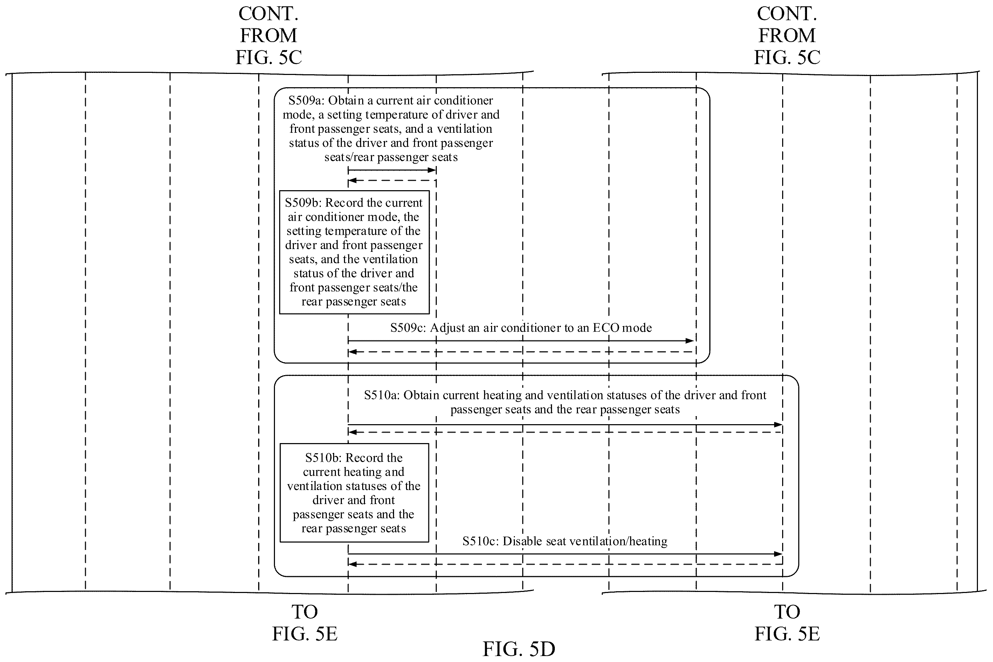

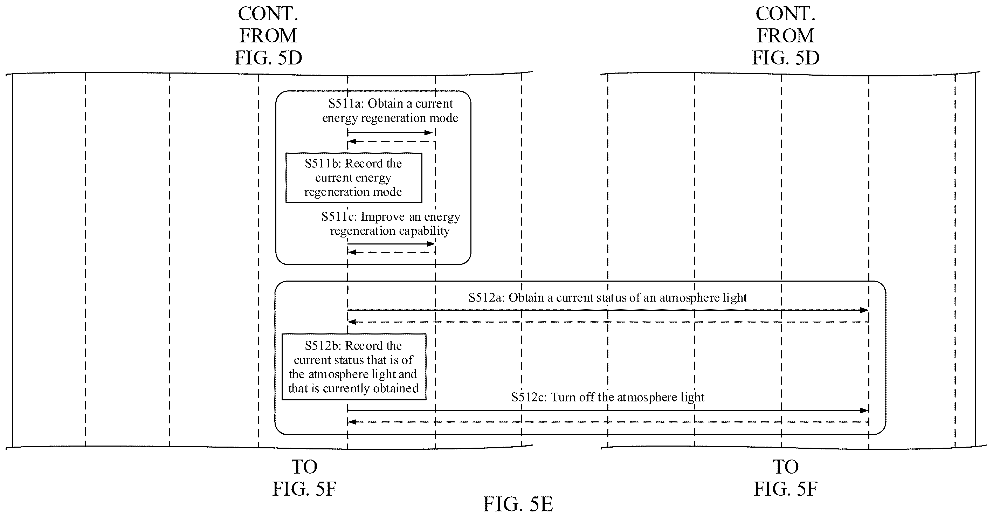

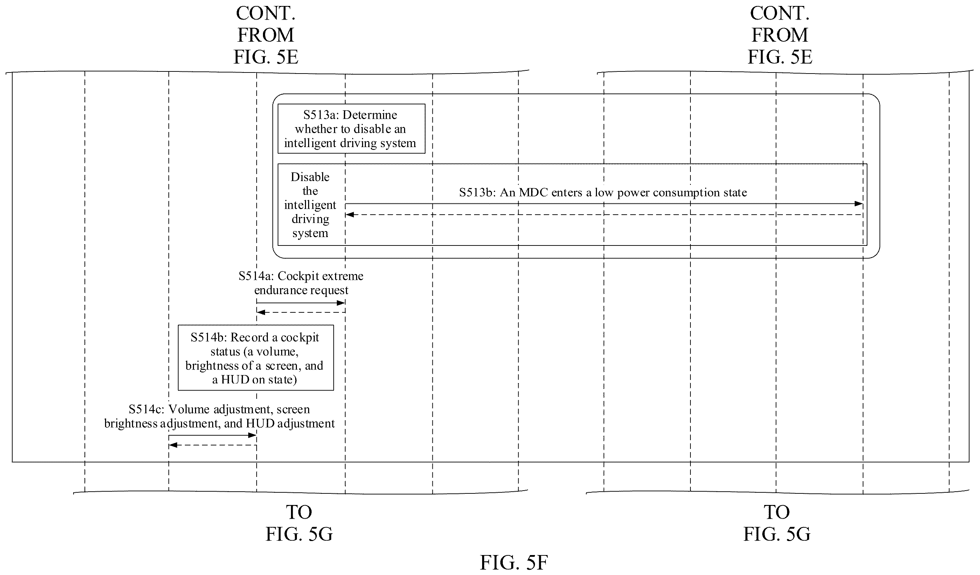

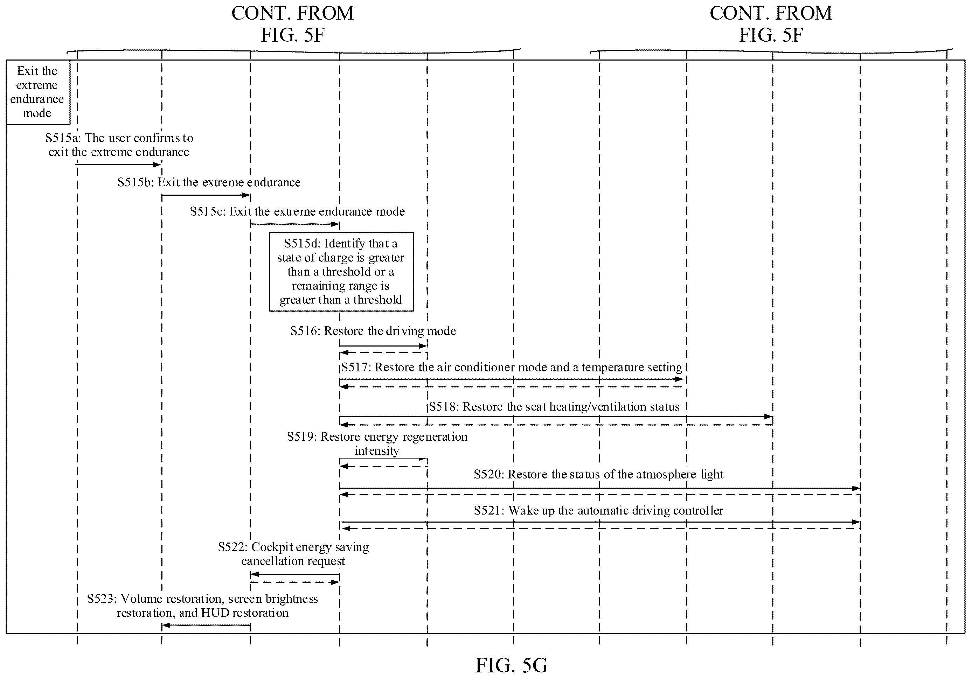

FIG. 5A to FIG. 5G are a schematic flowchart of another control method according to an embodiment of this application. A method 500 may be applied to the carrier 100 in FIG. 1, and the method 500 may include the following steps.

S501: A vehicle control controller obtains an indicator of entering an extreme endurance mode.

Step S501 may include the following two parallel sub-solutions.

S501a: If a state of charge (state of charge, SOC) of a vehicle is used as the indicator for the vehicle to enter the extreme endurance mode, a second extreme endurance application (application, App) in the vehicle control controller can periodically obtain the state of charge of the vehicle from an energy control module, to determine whether to enter the extreme endurance mode.

For example, when the state of charge of the vehicle is greater than or equal to a preset threshold, it is determined that the extreme endurance mode is not entered; or when the state of charge of the vehicle is less than a preset threshold, it is determined that the extreme endurance mode is entered.

For example, the preset threshold may be set to that the state of charge of the vehicle is 10%.

S501b: If a remaining range of a vehicle is used as the indicator for the vehicle to enter the extreme endurance mode, a second extreme endurance app can periodically obtain the remaining traveling range of the vehicle from an energy control module, to determine whether to enter the extreme endurance mode.

For example, when the remaining traveling range of the vehicle is greater than or equal to a preset threshold, it is determined that the extreme endurance mode is not entered; or when the remaining traveling range of the vehicle is less than a preset threshold, it is determined that the extreme endurance mode is entered.

For example, the preset threshold may be set to that the remaining traveling range of the vehicle is 30 kilometers.

It should be understood that the extreme endurance mode in this application may also be referred to as an endurance mode, an ultimate energy saving mode, an ECO mode, an ECO+ mode, or a long-distance mode. The extreme endurance mode in this application may alternatively be another mode that enables a user to obtain a longer endurance range.

S502: The vehicle control controller obtains a vehicle speed.

Specifically, after the indicator for the vehicle to enter the extreme endurance mode is determined, the second extreme endurance app can periodically obtain traveling speed information of the vehicle from a motion control module.

S503: A cockpit controller obtains extreme endurance configuration information.

Specifically, this step may include three substeps.

S503a: A first extreme endurance app subscribes to the extreme endurance configuration information, where the first extreme endurance app may be located in the cockpit controller of the vehicle.

S503b: The first extreme endurance app obtains modified configuration information of the user, where the modified configuration information may indicate a preference of the user. For example, the user may tap the option 4067 shown in FIG. 4(g) to modify configuration information.

S503c: The first extreme endurance app generates the extreme endurance configuration information based on the modified configuration information, and sends the extreme endurance configuration information to the second extreme endurance app. The endurance configuration information may indicate whether to disable an automatic driving function after the vehicle enters the extreme endurance mode.

It should be understood that the extreme endurance configuration information may be the first configuration information in the method 300.

S504: The vehicle control controller identifies that the vehicle speed is excessively high, and notifies the user of reducing the vehicle speed.

Specifically, this step may include the following three substeps.

S504a: The second extreme endurance app identifies that the current traveling speed of the vehicle is excessively high and an extreme endurance state cannot be entered. A determining process may be as follows: If a current vehicle speed is greater than or equal to a preset threshold, it may be determined that the current vehicle speed of the vehicle is excessively high and the extreme endurance state cannot be entered; or if a current vehicle speed is less than a preset threshold, it may be determined that the current vehicle speed can enter the extreme endurance state.

For example, the preset threshold may be set to 80 kilometers/hour. When the second endurance app identifies that the current vehicle speed is greater than 80 kilometers/hour, it may be determined that the vehicle speed of the vehicle is excessively high and the extreme endurance state cannot be entered. When the current vehicle speed is less than 80 kilometers/hour, the second endurance app may determine that the current vehicle speed can enter the extreme endurance state.

S504b: The second extreme endurance app sends speed reduction reminder information to the first extreme endurance app.

S504c: The first extreme endurance app sends a speed reduction pop-up window request to a human-computer interaction function module.

S504d: The human-computer interaction function module prompts the user to reduce the speed, to safely enter the extreme endurance mode.

Prompting the user to reduce the speed may be implemented through voice information or text information. When the prompt is the voice information, the prompt may be sent to the user by using a vehicle-mounted voice assistant or a speaker of the vehicle. When the prompt is the text information, the prompt may be sent to the user through a pop-up window of a vehicle-mounted display.

S505: The vehicle control controller performs deceleration.

The second extreme endurance app may automatically perform vehicle deceleration, or the user may adjust an opening degree of an acceleration pedal based on prompt information, to safely enter the extreme endurance mode.

It should be understood that, if the vehicle travels at a high speed, directly entering the extreme endurance mode may cause a security risk. This is because a torque output capability of the vehicle in the extreme endurance mode is limited, and torque of the vehicle may be insufficient to support the vehicle in maintaining high-speed traveling after the vehicle enters the extreme endurance mode.

In this embodiment of this application, the vehicle control controller can determine, based on the traveling speed of the vehicle, whether the vehicle can enter the extreme endurance mode. When the vehicle speed is excessively high, the vehicle control controller sends the prompt information to the user to prompt the user to reduce the vehicle speed, to ensure that the vehicle can safely enter the extreme endurance mode.

S506: The vehicle control controller requests to enable the extreme endurance mode.

Specifically, this step may include the following four substeps.

S506a: The second extreme endurance app sends an extreme endurance pop-up window request to the first extreme endurance app, where the extreme endurance pop-up window request is used to request to enable the extreme endurance mode.

S506b: The first extreme endurance app sends the extreme endurance pop-up window request to the human-computer interaction function module.

S506c: The human-computer interaction function module prompts the user to enable the extreme endurance mode.

Prompting the user to enable the extreme endurance mode may be implemented through voice information or text information. When the prompt is the voice information, the prompt may be sent to the user by using the vehicle-mounted voice assistant or the speaker of the vehicle. When the prompt is the text information, the prompt may be sent to the user through a pop-up window of the vehicle-mounted display.

S506d: The user confirms to enable the extreme endurance mode.

S507: The cockpit controller responds to the extreme endurance pop-up window request of the vehicle control controller.

Specifically, this step may include the following two substeps.

S507a: The first extreme endurance app receives extreme endurance pop-up window screen response information from the human-computer interaction module, where the response information indicates the user to enable the extreme endurance mode.

S507b: The first extreme endurance app responds to the extreme endurance pop-up window request of the second extreme endurance app.

S508: The vehicle control controller configures the extreme endurance mode.

Specifically, this step may include the following three substeps.

S508a: The second extreme endurance app obtains a current driving mode from a driving module, where the current driving mode may be a driving mode currently enabled by the vehicle, and may include an accelerated traveling mode, a normal traveling mode, a violent mode, a comfort mode, a sandy mode, a racing mode, and the like.

S508b: The second extreme endurance app records the current driving mode.

S508c: The second extreme endurance app sends indication information to the driving module, to indicate the driving module to configure the extreme endurance mode.

S509: The vehicle control controller adjusts an in-vehicle thermal management mode.

Specifically, this step may include the following three substeps.

S509a: The second extreme endurance app obtains one or more of the following information from the driving module: a current air conditioner mode, a setting temperature of driver and front passenger seats, and a ventilation status of the driver and front passenger seats/rear passenger seats.

S509b: The second extreme endurance app records the current air conditioner mode, the setting temperature of the driver and front passenger seats, and the ventilation status of the driver and front passenger seats/the rear passenger seats. Recording the current air conditioner mode may include: recording one or more of the following: an on/off state of an air conditioner, a target temperature that needs to be configured, and an air volume.

S509c: The second extreme endurance app sends indication information to a thermal management module, to indicate the thermal management module to adjust the air conditioner to the ECO mode.

S510: The vehicle control controller adjusts a seat service.

Specifically, this step may include the following three substeps.

S510a: The second extreme endurance app obtains current heating and ventilation statuses of driver and front passenger seats and the rear passenger seats from a seat service module.

S510b: The second extreme endurance app records the current heating and ventilation statuses of the driver and front passenger seats and the rear passenger seats. Recording the current heating and ventilation statuses of the driver and front passenger seats and the rear passenger seats may include: recording current ventilation/heating switch statuses and gears of the driver and front passenger seats and the rear passenger seats.

S510c: The second extreme endurance app sends indication information to the seat service module, to indicate the seat service module to disable a seat ventilation/heating function.

S511: The vehicle control controller adjusts an energy regeneration mode of the vehicle.

Specifically, this step may include the following three substeps.

S511a: The second extreme endurance app obtains a current energy regeneration mode from a driving mode module.

S511b: The second extreme endurance app records the current energy regeneration mode of the vehicle.

S511c: The second extreme endurance app sends indication information to the driving mode module, to indicate the driving mode module to improve an energy regeneration capability.

S512: The vehicle control controller adjusts a status of an atmosphere light.

Specifically, this step may include the following two substeps.

S512a: The second extreme endurance app obtains the status of the atmosphere light from an atmosphere light service module.

S512b: The second extreme endurance app records the status of the atmosphere light, where the status of the atmosphere light may include an on/off state of the atmosphere light and/or an atmosphere light mode.

S513: The vehicle control controller determines whether to disable an automatic driving system.

Specifically, this step may include the following two substeps.

S513a: The second extreme endurance app determines, based on the received extreme endurance configuration information, whether to disable the automatic driving system, that is, configures an automatic driving controller to be in a low power consumption state.

S513b: If the extreme endurance configuration information indicates to disable the automatic driving system, the second extreme endurance app may send indication information to the automatic driving controller, to indicate the automatic driving controller to enter the low power consumption state.

It should be understood that the low power consumption state may be the second working state in the method 300.

In this embodiment of this application, the vehicle control controller can determine, according to an indication of the extreme endurance configuration information, whether to configure the automatic driving controller to be in the low power consumption state. In this way, before the vehicle configures the automatic driving controller to be in the low power consumption state, a driving intention of the user is fully taken into account, thereby improving driving experience of the user.

S514: The cockpit controller controls HUD, a cockpit volume, and brightness of a central control screen to enter an energy saving state.

Specifically, this step may include the following three substeps.

S514a: The first extreme endurance app receives cockpit extreme endurance request information from the second extreme endurance app.

S514b: The first extreme endurance app records a volume, brightness of the central control screen, and a HUD on state of a current cockpit status.

S514c: The first extreme endurance app sends indication information to the human-computer interaction function module, to indicate the human-computer interaction function module, to disable an HUD display function, reduce the cockpit volume, and reduce the brightness of the central control screen.

S515: The vehicle control controller determines whether to exit the extreme endurance mode.

Optionally, the user may manually exit the extreme endurance mode, that is, steps S515a to S515c are performed.

Optionally, when determining that the state of charge of the vehicle is greater than a preset threshold or the remaining range of the vehicle is greater than a preset threshold, the vehicle control controller automatically exits the extreme endurance mode, that is, step S515d is performed.

S515a: The user taps a power saving shortcut key and determines to exit the extreme endurance mode. For example, the user may tap the control 4064 in FIG. 4(e) to disable the extreme endurance mode.

S515b: The human-computer interaction function module sends, to the first extreme endurance app, information about exiting the extreme endurance mode.

S515c: The first extreme endurance app sends, to the second extreme endurance app, the information about exiting the extreme endurance mode.

S515d: The second extreme endurance app determines whether the state of charge of the vehicle is greater than the preset threshold or whether the remaining range of the vehicle is greater than the preset threshold, and exits the extreme endurance mode when the state of charge of the vehicle is greater than the preset threshold or the remaining range of the vehicle is greater than the preset threshold.

For example, when determining that the state of charge of the vehicle is greater than 10%, the first endurance app may automatically exit the extreme endurance mode. For another example, when determining that the remaining range of the vehicle is greater than 50 kilometers, the first endurance app may automatically exit the extreme endurance mode.

S516: The vehicle control controller restores the driving mode.

Specifically, the second extreme endurance app sends driving mode restoration information to the driving mode module when receiving the information about exiting the extreme endurance mode or determining that the state of charge of the vehicle is greater than the preset threshold or the remaining range of the vehicle is greater than the preset threshold. Restoring the driving mode may mean that the vehicle adjusts a driving mode to the driving mode existing before the extreme endurance mode is enabled.

S517: The vehicle control controller restores the air conditioner mode and a temperature setting.

Specifically, the second extreme endurance app sends, to the thermal management module, indication information for restoring the air conditioner mode and the temperature setting.

S518: The vehicle control controller restores the seat heating/ventilation status.

Specifically, the second extreme endurance app sends seat heating/ventilation status restoration indication information to the seat service module.

S519: The vehicle control controller restores energy regeneration intensity.

Specifically, the second extreme endurance app sends energy regeneration intensity restoration indication information to the driving mode module.

S520: The vehicle control controller restores the status of the atmosphere light.

Specifically, the second extreme endurance app sends atmosphere light status restoration indication information to the atmosphere light service module.

It should be understood that, in steps S516 to S520, each module may be restored, by using content recorded by the second extreme endurance app in steps S508 to S512, to a state existing before energy saving.

S521: The vehicle control controller wakes up the automatic driving controller.

Specifically, the second extreme endurance app sends indication information for waking up the automatic driving controller to the automatic driving controller.

S522: The cockpit controller receives cockpit energy saving cancellation request information sent by the vehicle control controller.

Specifically, the first extreme endurance app receives the cockpit energy saving cancellation request information sent by the second extreme endurance app.

S523: The cockpit controller restores the volume, the brightness of the central control screen, and the head-up display.

Specifically, the first extreme endurance app sends indication information to the human-computer interaction function module, to restore the volume, the brightness of the central control screen, and the head-up display. The first extreme endurance app may restore, based on content recorded in step S514, a cockpit status to the state existing before energy saving.

In addition, after the endurance mode is exited, in addition to restoring the foregoing functions to states existing before energy saving, an air suspension status, a vehicle speed limit, a torque limit, an on/off state of a blower, a blower gear status, a steering wheel heating status, and a steering wheel heating gear of the vehicle can be further restored to states existing before energy saving.

It should be understood that, after the vehicle enters the extreme endurance mode, when electric energy of the vehicle is restored, if the vehicle still maintains the extreme endurance state, the driving experience of the user (for example, adjusting an air conditioner temperature and providing a seat heating function) may not be ensured.

In this embodiment of this application, the cockpit controller and the vehicle control controller can record setting information of various services used by the user in a non-extreme endurance mode. After the vehicle exits the extreme endurance mode, the vehicle can quickly restore settings of the services based on the recorded information, thereby improving the driving experience of the user.

It should be further understood that, in the foregoing embodiment, the cockpit controller, the vehicle control controller, and the automatic driving controller separately perform respective actions. In some implementations, the cockpit controller, the vehicle control controller, and the automatic driving controller may be integrated into one controller (for example, the first controller of the method 300). The controller may perform actions performed by the cockpit controller, the vehicle control controller, and the automatic driving controller.

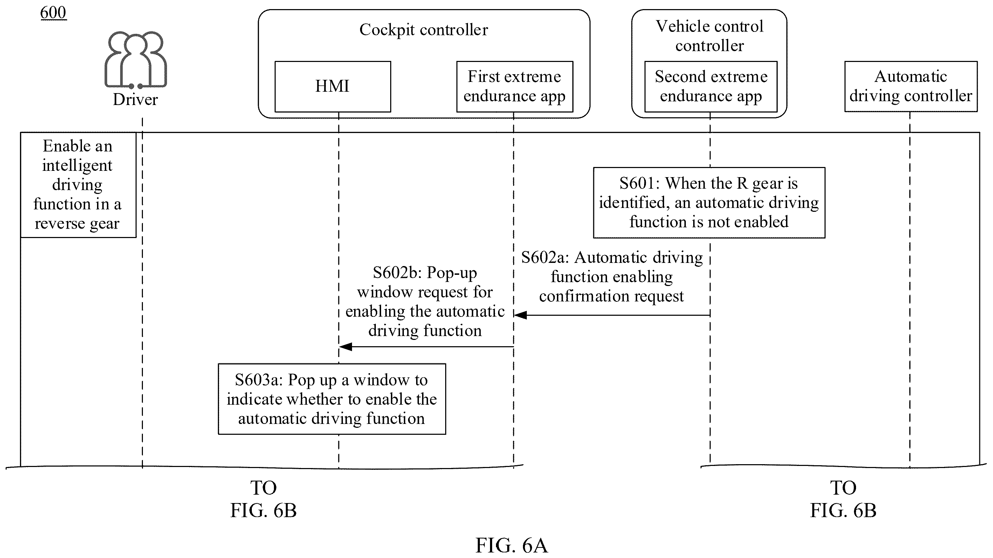

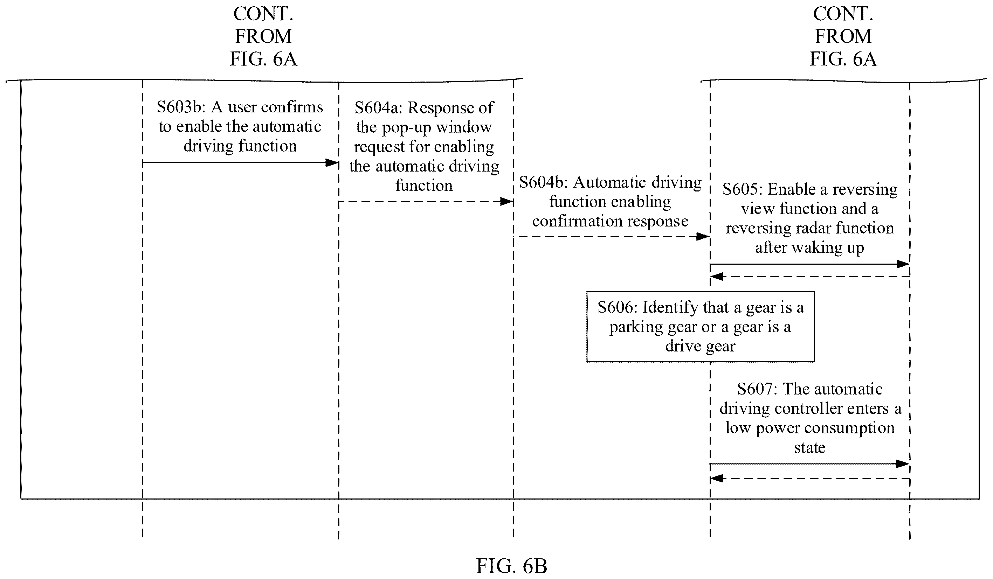

FIG. 6A and FIG. 6B are a schematic flowchart of another control method according to an embodiment of this application. A method 600 may be applied to the carrier 100 in FIG. 1, and the method 600 may include the following steps.

S601: An automatic control controller identifies that a current gear is a reverse gear and an automatic driving function is not enabled.

S602: The automatic control controller sends an automatic driving function enabling request to a cockpit controller, to request to enable the automatic driving function.

Specifically, this step may include the following two substeps.

S602a: A first extreme endurance app receives, from a second extreme endurance app, automatic driving function enabling confirmation request information.

S602b: The first extreme endurance app sends a pop-up window request to a human-computer interaction function module, to prompt a user to enable the automatic driving function.

Optionally, the pop-up window request may be further used to prompt the user to enable at least one of the following: a reversing radar function, a holographic view function, and a reversing view function.

Optionally, the pop-up window request may alternatively be replaced with voice prompt information, and a vehicle-mounted voice assistant or a speaker prompts, through voice, the user to enable the automatic driving function.

S603: The user confirms to enable the automatic driving function.

Specifically, this step may include the following two substeps.

S603a: The human-computer interaction function module pops up a window to indicate the user whether to enable the automatic driving function.

S603b: The user confirms to enable the automatic driving function.

The user may enable the automatic driving function by tapping a control on a vehicle-mounted display, or the user may enable the automatic driving function through voice confirmation.

S604: The cockpit controller responds to the automatic driving function enabling request of the vehicle control controller.

Specifically, this step may include the following two substeps.

S604a: The first extreme endurance app receives response information that is of the pop-up window request for enabling the automatic driving function and that is sent by the human-computer interaction function module.

S604b: The first extreme endurance app sends automatic driving function enabling confirmation response information to the second extreme endurance app.

S605: The vehicle control controller restores output power of an automatic driving controller, and enables functions such as the reversing radar function, the reversing view function, and a panoramic view function that are required for reversing.

S606: The vehicle control controller identifies that a vehicle is in a parking gear or identifies that a vehicle is in a drive gear (a D gear).

Optionally, this step may specifically include: The cockpit controller determines that duration in which a gear of the vehicle is the parking gear or the drive gear is greater than or equal to a first threshold, or determines that a gear of the vehicle is the parking gear or the drive gear, and a traveling speed of the vehicle is greater than or equal to a second threshold.

For example, when it is detected that the duration in which the vehicle is in the parking gear or the drive gear is greater than or equal to 5 minutes, the cockpit controller can control the automatic driving controller to be in a low power consumption state. For another example, when it is detected that the gear of the vehicle is the parking gear or the drive gear, and the traveling speed of the vehicle is greater than or equal to 40 km/h, the cockpit controller can control the automatic driving controller to be in a low power consumption state.

It should be understood that the low power consumption state may be the second working state in the method 300.

S607: The vehicle control controller sends indication information to the automatic driving controller, to indicate the automatic driving controller to enter the low power consumption state.

In this embodiment of this application, when the vehicle is in the reverse gear and the automatic driving function is not enabled, the vehicle control controller can confirm, to the user by using the cockpit controller, whether to enable the automatic driving function. After the user chooses to enable the automatic driving function, the vehicle control controller can control the function required for reversing to be enabled. In this way, in an extreme endurance mode, a driving intention of the user is taken into account, and driving experience of the user is improved.

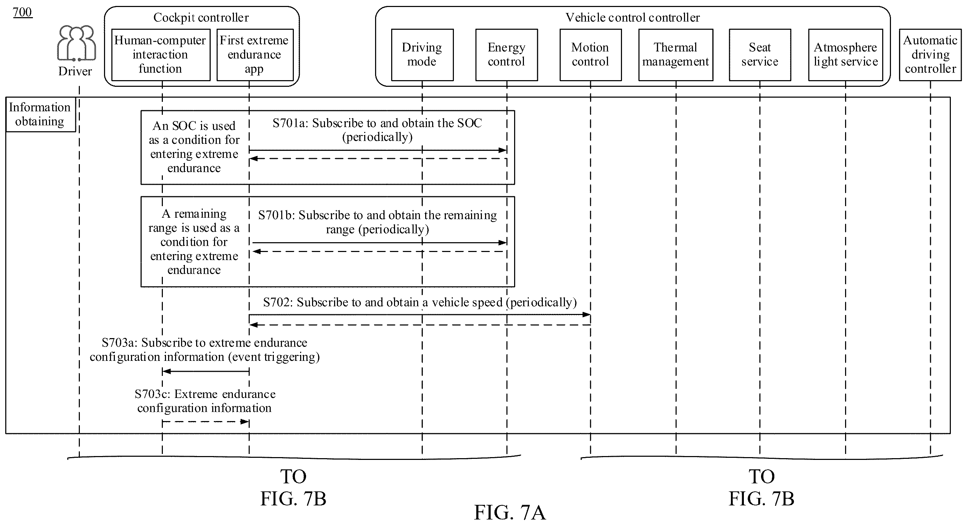

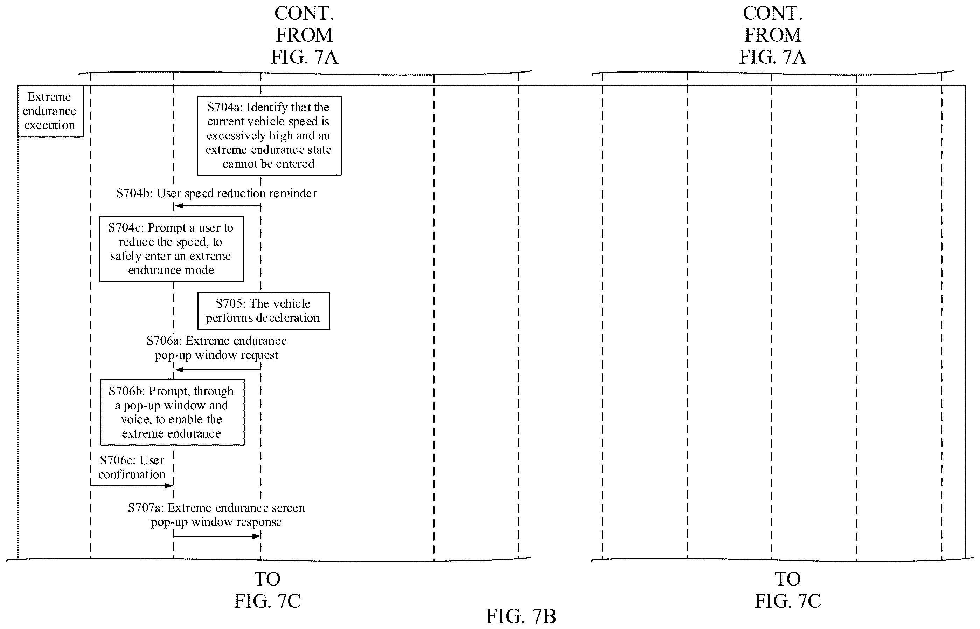

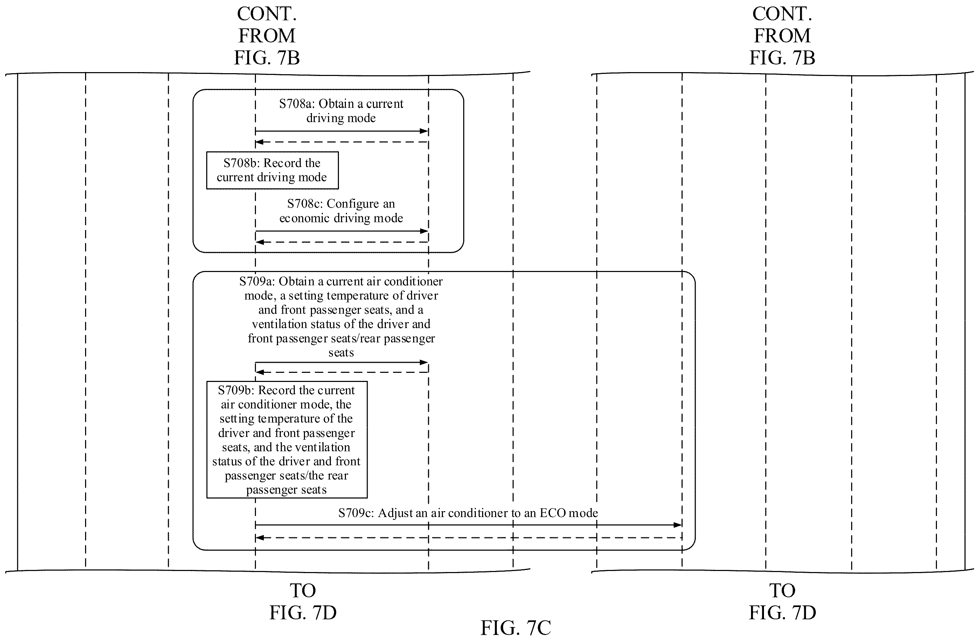

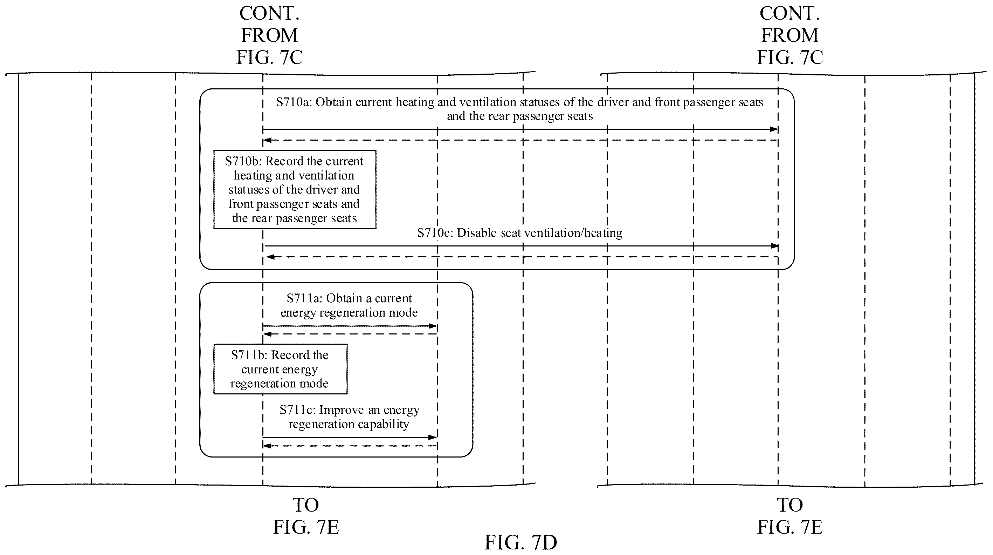

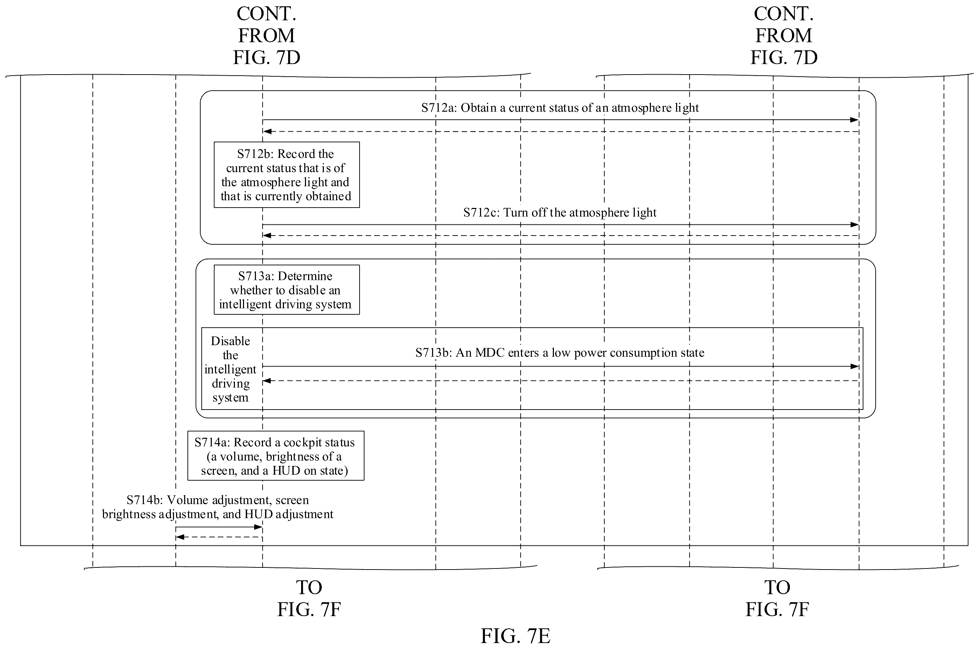

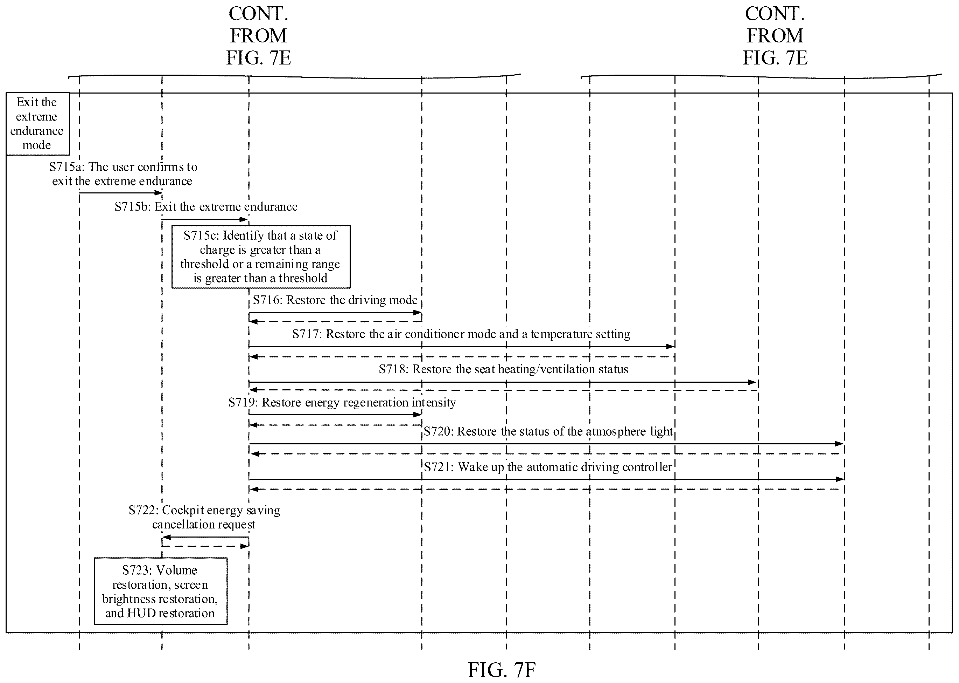

FIG. 7A to FIG. 7F are a schematic flowchart of another control method according to an embodiment of this application. A method 700 may be applied to the carrier 100 in FIG. 1. The method 700 and the method 500 may be parallel solutions. The method 700 may include the following steps.

S701: A cockpit controller obtains an indicator of entering an extreme endurance mode.

Step S701 may include two parallel sub-solutions.

S701a: If a state of charge (state of charge, SOC) of a vehicle is used as the indicator for the vehicle to enter the extreme endurance mode, a first extreme endurance app in the cockpit controller can periodically obtain the state of charge of the vehicle from an energy control module in a vehicle control controller, to determine whether to enter the extreme endurance mode.

For example, when the state of charge of the vehicle is greater than or equal to a preset threshold, it is determined that the extreme endurance mode is not entered; or when the state of charge of the vehicle is less than a preset threshold, it is determined that the extreme endurance mode is entered.

S701b: If a remaining range of a vehicle is used as the indicator for the vehicle to enter the extreme endurance mode, a first extreme endurance app can periodically obtain the remaining traveling range of the vehicle from an energy control module, to determine whether to enter the extreme endurance mode.

For example, when the remaining traveling range of the vehicle is greater than or equal to a preset threshold, it is determined that the extreme endurance mode is not entered; or when the remaining traveling range of the vehicle is less than a preset threshold, it is determined that the extreme endurance mode is entered.

S702: The cockpit controller obtains a vehicle speed.

Specifically, after the indicator for the vehicle to enter the extreme endurance mode is determined, the first extreme endurance app can periodically obtain traveling speed information of the vehicle from a motion control module in the vehicle control controller.

S703: The cockpit controller obtains extreme endurance configuration information.

Specifically, this step may include the following two substeps.

S703a: A human-computer interaction function module subscribes to the extreme endurance information.

S703b: The first extreme endurance app receives the extreme endurance configuration information sent by the human-computer interaction module, where the extreme endurance configuration information may indicate whether to disable an automatic driving function after the vehicle enters the extreme endurance mode.

It should be understood that the extreme endurance configuration information may be the first configuration information in the method 300.

S704: The cockpit controller identifies that the vehicle speed is excessively high, and notifies a user of reducing the vehicle speed.

Specifically, this step may include the following three substeps.

S704a: The first extreme endurance app identifies that the current traveling speed of the vehicle is excessively high and an extreme endurance state cannot be entered. A determining process may be as follows: If a current vehicle speed is greater than a preset threshold, it may be determined that the current vehicle speed of the vehicle is excessively high; or if a current vehicle speed is less than a preset threshold, it may be determined that the current vehicle speed can enter the extreme endurance state.

For example, the preset threshold may be set to 80 kilometers/hour. When the second endurance app identifies that the current vehicle speed is greater than 80 kilometers/hour, it may be determined that the vehicle speed of the vehicle is excessively high and the extreme endurance state cannot be entered. When the current vehicle speed is less than 80 kilometers/hour, the second endurance app may determine that the current vehicle speed can enter the extreme endurance state.

S704b: The first extreme endurance app sends a speed reduction reminder message to the human-computer interaction function module.

S704c: The human-computer interaction function module prompts the user to reduce the speed, to safely enter the extreme endurance mode.

Prompting the user to reduce the speed may be implemented through voice information or text information. When the prompt is the voice information, the prompt may be sent to the user by using a vehicle-mounted voice assistant or a speaker of the vehicle. When the prompt is the text information, the prompt may be sent to the user through a pop-up window of a vehicle-mounted display.

S705: The cockpit controller performs deceleration.

The first extreme endurance app may automatically perform vehicle deceleration, to safely enter the extreme endurance mode.

It should be understood that, if the vehicle travels at a high speed, directly entering the extreme endurance mode may cause a security risk. This is because a torque output capability of the vehicle in the extreme endurance mode is limited, and torque of the vehicle may be insufficient to support the vehicle in maintaining high-speed traveling after the vehicle enters the extreme endurance mode.

In this embodiment of this application, the cockpit controller can determine, based on the traveling speed of the vehicle, whether the vehicle can enter the extreme endurance mode. When the vehicle speed is excessively high, the cockpit controller sends prompt information to the user to prompt the user to reduce the vehicle speed, to ensure that the vehicle can safely enter the extreme endurance mode.

S706: The cockpit controller requests the user to enable the extreme endurance mode.

Specifically, this step may include the following three substeps.

S706a: The first extreme endurance app sends an extreme endurance pop-up window request to the human-computer interaction function module.

S706b: The human-computer interaction function module prompts the user to enable the extreme endurance mode.

Prompting the user to enable the extreme endurance mode may be implemented through voice information or text information. When the prompt is the voice information, the prompt may be sent to the user by using the vehicle-mounted voice assistant or the speaker of the vehicle. When the prompt is the text information, the prompt may be sent to the user through a pop-up window of the vehicle-mounted display.

S706c: The user confirms to enable the extreme endurance mode.

S707: Respond to the extreme endurance pop-up window request.

Specifically, the human-computer interaction function module sends extreme endurance pop-up window response information to the first extreme endurance app.

S708: The cockpit controller configures the extreme endurance mode.

Specifically, this step may include the following three substeps.

S708a: The first extreme endurance app obtains a current driving mode from a driving module, where the current driving mode may be a driving mode currently enabled by the vehicle, and may include an accelerated traveling mode, a normal traveling mode, a violent mode, a comfort mode, a sandy mode, a racing mode, and the like.

S708b: The first extreme endurance app records the current driving mode.

S708c: The first extreme endurance app sends indication information to the driving module, to indicate the driving module to configure the extreme endurance mode.

S709: The cockpit controller adjusts an in-vehicle thermal management mode.

Specifically, this step may include the following three substeps.

S709a: The first extreme endurance app obtains one or more of the following information from the driving module: a current air conditioner mode, a setting temperature of driver and front passenger seats, and a ventilation status of the driver and front passenger seats/rear passenger seats.

S709b: The first extreme endurance app records the current air conditioner mode, the setting temperature of the driver and front passenger seats, and the ventilation status of the driver and front passenger seats/the rear passenger seats. Recording the current air conditioner mode may include: recording one or more of the following: an on/off state of an air conditioner, a target temperature that needs to be configured, and an air volume.

S709c: The first extreme endurance app sends indication information to a thermal management module, to indicate the thermal management module to adjust the air conditioner to an ECO mode.

S710: The cockpit controller adjusts a seat service.

Specifically, this step may include the following three substeps.

S710a: The first extreme endurance app obtains current heating and ventilation statuses of the driver and front passenger seats and the rear passenger seats from a seat service module.

S710b: The first extreme endurance app records the current heating and ventilation statuses of the driver and front passenger seats and the rear passenger seats. Recording the current heating and ventilation statuses of the driver and front passenger seats and the rear passenger seats may include: recording current ventilation/heating switch statuses and gears of the driver and front passenger seats and the rear passenger seats.

S710c: The first extreme endurance app sends indication information to the seat service module, to indicate the seat service module to disable a seat ventilation/heating function.

S711: The cockpit controller adjusts an energy regeneration mode of the vehicle.

Specifically, this step may include the following three substeps.

S711a: The first extreme endurance app obtains a current energy regeneration mode from a driving mode module.

S711b: The first extreme endurance app records the current energy regeneration mode of the vehicle.

S711c: The first extreme endurance app sends indication information to the driving mode module, to indicate the driving mode module to improve an energy regeneration capability.

S712: The cockpit controller adjusts a status of an atmosphere light.

Specifically, this step may include the following two substeps.

S712a: The first extreme endurance app obtains the status of the atmosphere light from an atmosphere light service module.

S712b: The first extreme endurance app records the status of the atmosphere light, where the status of the atmosphere light may include an on/off state of the atmosphere light and/or an atmosphere light mode.

S713: The cockpit controller determines whether to disable an automatic driving system.

Specifically, this step may include the following two substeps.

S713a: The first extreme endurance app determines, based on the received extreme endurance configuration information, whether to disable the automatic driving system, that is, configures an automatic driving controller to be in a low power consumption state.

S713b: If the extreme endurance configuration information indicates to disable the automatic driving system, the first extreme endurance app may send indication information to the automatic driving controller, to indicate the automatic driving controller to enter the low power consumption state.

In this embodiment of this application, the cockpit controller can determine, according to an indication of the extreme endurance configuration information, whether to configure the automatic driving controller to be in the low power consumption state. In this way, before the vehicle configures the automatic driving controller to be in the low power consumption state, a driving intention of the user is fully taken into account, thereby improving driving experience of the user.

It should be understood that the low power consumption state may be the second working state in the method 300.

S714: The cockpit controller controls HUD, a cockpit volume, and brightness of a central control screen to enter an energy saving state.

Specifically, this step may include the following two substeps.

S714a: The first extreme endurance app records a volume, brightness of the central control screen, and a HUD on state of a current cockpit status.

S714b: The first extreme endurance app sends indication information to the human-computer interaction function module, to indicate the human-computer interaction function module, to disable an HUD display function, reduce the cockpit volume, and reduce the brightness of the central control screen.

S715: The cockpit controller determines whether to exit the extreme endurance mode.

Optionally, the user may manually exit the extreme endurance mode, that is, steps S715a and S715b are performed.

Optionally, when determining that the state of charge of the vehicle is greater than a preset threshold or the remaining range of the vehicle is greater than a preset threshold, the cockpit controller automatically exits the extreme endurance mode, that is, step S715c is performed.

S715a: The user taps a power saving shortcut key and determines to exit the extreme endurance mode. For example, the user may tap the control 4064 in FIG. 4(e) to disable the extreme endurance mode.

S715b: The human-computer interaction function module sends, to the first extreme endurance app, information about exiting the extreme endurance mode.

S715c: The first extreme endurance app determines whether the state of charge of the vehicle is greater than the preset threshold or whether the remaining range of the vehicle is greater than the preset threshold, and exits the extreme endurance mode when the state of charge of the vehicle is greater than the preset threshold or the remaining range of the vehicle is greater than the preset threshold.

For example, when determining that the state of charge of the vehicle is greater than 10%, the first endurance app may automatically exit the extreme endurance mode. For another example, when determining that the remaining range of the vehicle is greater than 50 kilometers, the first endurance app may automatically exit the extreme endurance mode.

S716: The cockpit controller restores the driving mode.

Specifically, the first extreme endurance app sends driving mode restoration information to the driving mode module when receiving the information about exiting the extreme endurance mode or determining that the state of charge of the vehicle is greater than the preset threshold or the remaining range of the vehicle is greater than the preset threshold. Restoring the driving mode may mean that the vehicle adjusts a driving mode to the driving mode existing before the extreme endurance mode is enabled.

S717: The cockpit controller restores the air conditioner mode and a temperature setting.

Specifically, the first extreme endurance app sends, to the thermal management module, indication information for restoring the air conditioner mode and the temperature setting.

S718: The cockpit controller restores the seat heating/ventilation status.

Specifically, the first extreme endurance app sends seat heating/ventilation status restoration indication information to the seat service module.

S719: A cockpit restores energy regeneration intensity.

Specifically, the first extreme endurance app sends energy regeneration intensity restoration indication information to the driving mode module.

S720: The cockpit controller restores the status of the atmosphere light.

Specifically, the first extreme endurance app sends atmosphere light status restoration indication information to the atmosphere light service module.

It should be understood that, in steps S716 to S720, each module may be restored, by using content recorded by the second extreme endurance app in steps S708 to S712, to a state existing before energy saving.

S721: The cockpit controller wakes up the automatic driving controller.

Specifically, the second extreme endurance app sends indication information for waking up the automatic driving controller to the automatic driving controller.

S722: The cockpit controller cancels the energy saving state.

Specifically, the human-computer interaction function module receives a cockpit energy saving cancellation request message sent by the first endurance app.

S723: The cockpit controller restores the volume, the brightness of the central control screen, and the head-up display.

Specifically, after receiving the cockpit energy saving cancellation request message, the human-computer interaction function module restores the volume, the brightness of the central control screen, and the head-up display. The cockpit energy saving cancellation request message may include information recorded by the first extreme endurance app in step S714, and the human-computer interaction function module may restore, based on the information, a cockpit status to the state existing before energy saving.

In addition, after the endurance mode is exited, in addition to restoring the foregoing functions to states existing before energy saving, an air suspension status, a vehicle speed limit, a torque limit, an on/off state of a blower, a blower gear status, a steering wheel heating status, and a steering wheel heating gear of the vehicle can be further restored to states existing before energy saving.

It should be understood that, after the vehicle enters the extreme endurance mode, when electric energy of the vehicle is restored, if the vehicle still maintains the extreme endurance state, the driving experience of the user (for example, adjusting an air conditioner temperature and providing a seat heating function) may not be ensured.

In this embodiment of this application, the cockpit controller can record setting information of various services used by the user in a non-extreme endurance mode. After the vehicle exits the extreme endurance mode, the vehicle can quickly restore settings of the services based on the recorded information, thereby improving the driving experience of the user.

It should be further understood that, in the foregoing embodiment, the cockpit controller, the vehicle control controller, and the automatic driving controller separately perform respective actions. In some implementations, the cockpit controller, the vehicle control controller, and the automatic driving controller may be integrated into one controller (for example, the first controller of the method 300). The controller may perform actions performed by the cockpit controller, the vehicle control controller, and the automatic driving controller.

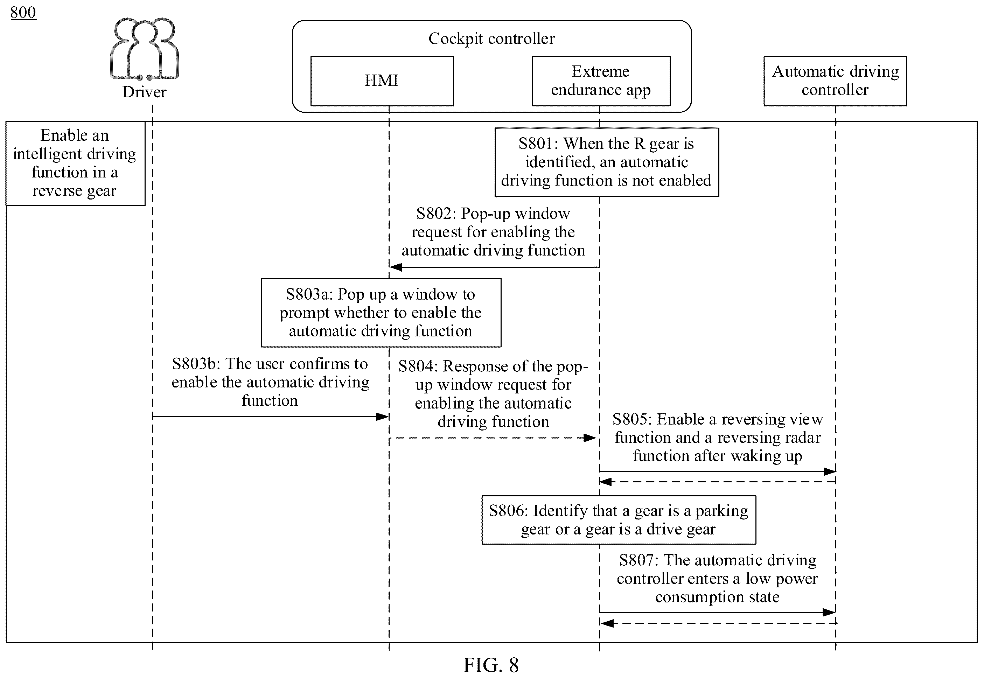

FIG. 8 is a schematic flowchart of another control method according to an embodiment of this application. A method 800 may be applied to the carrier 100 in FIG. 1. The method 800 and the method 600 may be parallel solutions. The method 800 may include the following steps.

S801: A cockpit controller identifies that a current gear is a reverse gear and an automatic driving function is not enabled.

S802: The cockpit controller requests to enable the automatic driving function.

Specifically, a first extreme endurance app sends a pop-up window request to a human-computer interaction function module, to prompt a user to enable the automatic driving function.

Optionally, the pop-up window request may be further used to prompt the user to enable at least one of the following: a reversing radar function, a holographic view function, and a reversing view function.

Optionally, the pop-up window request may alternatively be replaced with voice prompt information, and a vehicle-mounted voice assistant or a speaker prompts, through voice, the user to enable an automatic driving system.

S803: The user confirms to enable the automatic driving function.

Specifically, this step may include the following two substeps.

S803a: The cockpit controller pops up a window to indicate the user whether to enable the automatic driving function.

S803b: The user confirms to enable the automatic driving function.

The user may enable the automatic driving function by tapping a control on a vehicle-mounted display, or the user may enable the automatic driving function through voice confirmation.

S804: The cockpit controller obtains a pop-up window request response.

Specifically, the first extreme endurance app receives response information that is of the pop-up window request for enabling the automatic driving function and that is sent by the human-computer interaction function module.

S805: The cockpit controller restores output power of an automatic driving controller, and enables functions such as the reversing radar function, the reversing view function, and a panoramic view function that are required for reversing.

S806: The cockpit controller identifies that a vehicle is in a parking gear or identifies that a vehicle is in a drive gear (a D gear).

Optionally, this step may specifically include: The cockpit controller determines that duration in which a gear of the vehicle is the parking gear or the drive gear is greater than or equal to a first threshold, or determines that a gear of the vehicle is the parking gear or the drive gear, and a traveling speed of the vehicle is greater than or equal to a second threshold.

For example, when it is detected that the duration in which the vehicle is in the parking gear or the drive gear is greater than or equal to 5 minutes, the cockpit controller can control the automatic driving controller to be in a low working state. For another example, when it is detected that the gear of the vehicle is the parking gear or the drive gear, and the traveling speed of the vehicle is greater than or equal to 40 km/h, the cockpit controller can control the automatic driving controller to be in a low working state.

S807: The cockpit controller sends indication information to the automatic driving controller, to indicate the automatic driving controller to enter the low power consumption state.

In this embodiment of this application, when the vehicle is in the reverse gear and the automatic driving function is not enabled, the cockpit controller can confirm to the user whether to enable the automatic driving function. After the user chooses to enable the automatic driving function, the cockpit controller can control the function required for reversing to be enabled. In this way, in an extreme endurance mode, a driving intention of the user is taken into account, and driving experience of the user is improved.

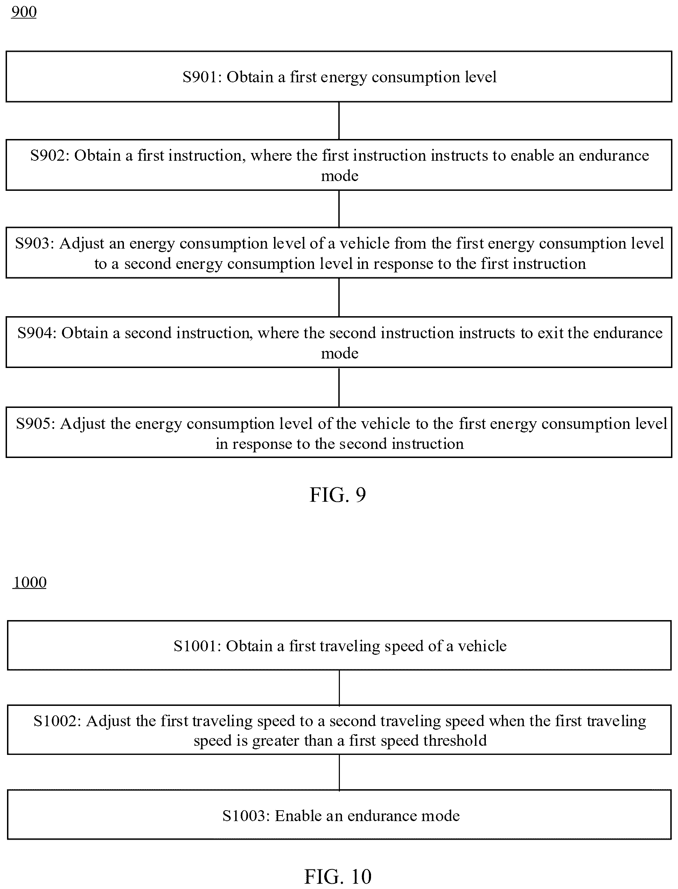

FIG. 9 is a schematic flowchart of another control method according to an embodiment of this application. A method 900 may be applied to the carrier 100 in FIG. 1, and the method 900 may include the following steps.

S901: Obtain a first energy consumption level.

The first energy consumption level may be an energy consumption level of a vehicle in a non-endurance mode.

S902: Obtain a first instruction, where the first instruction instructs to enable an endurance mode.

Optionally, a user may tap a corresponding control on a vehicle-mounted display to enable the endurance mode, or the user may enable the endurance mode by sending voice information to a vehicle-mounted voice assistant.

Optionally, when the vehicle detects that a state of charge is insufficient to support the vehicle in arriving at a destination, the vehicle displays a prompt box on the vehicle-mounted display, to prompt the user to enable the endurance mode.

S903: Adjust an energy consumption level of the vehicle from the first energy consumption level to a second energy consumption level in response to the first instruction.

The second energy consumption level may be an energy consumption level of the vehicle in the endurance mode. An energy consumption rate of the vehicle at the first energy consumption level is greater than an energy consumption rate of the vehicle at the second energy consumption level.

S904: Exit the endurance mode in response to the first instruction.

In a possible implementation, that a second instruction instructs to exit the endurance mode includes: The second instruction instructs to exit the endurance mode when the state of charge of a battery of the vehicle is greater than or equal to a first battery level or a remaining range of the vehicle is greater than or equal to a first range.

For example, when the state of charge of the vehicle is greater than or equal to 10%, a first controller may control the vehicle to exit the endurance mode. For another example, when the remaining traveling range of the vehicle is greater than 50 kilometers, a first controller may control the vehicle to exit the endurance mode.

S905: Adjust the energy consumption level of the vehicle to the first energy consumption level in response to the second instruction.

In this embodiment of this application, the first controller can obtain the first energy consumption level of the vehicle before enabling the endurance mode, and quickly adjust the energy consumption level of the vehicle to the first energy consumption level after exiting the endurance mode. In this way, driving comfort of the user can be further improved.

In a possible implementation, adjusting the second energy consumption level to the first energy consumption level includes at least one of the following content: adjusting a second air conditioner mode to a first air conditioner mode, adjusting a second energy regeneration gear state to a first energy regeneration gear state, adjusting a second air suspension state to a first air suspension state, adjusting a second vehicle speed limit to a first vehicle speed limit, and adjusting a second torque limit to a first torque limit.

There may be a specific relationship between an energy regeneration gear status and a driving mode of the vehicle, that is, an energy regeneration gear may correspond to one or more driving modes. For example, a first gear for energy regeneration may correspond to the endurance mode, and a second gear for energy regeneration may correspond to a normal traveling mode. Energy regeneration efficiency of the vehicle in the first gear is higher than energy regeneration efficiency of the vehicle in the second gear. For another example, a second gear for energy regeneration may correspond to both the endurance mode and a normal traveling mode.

Optionally, the first energy consumption level or the second energy consumption level or both further include one or more of the following: an on/off state of an air conditioner, an air conditioner setting temperature, a seat heating switch status, a seat heating gear status, a seat ventilation gear status, an on/off state of a blower, a blower gear status, a status of an atmosphere light, a head-up display switch status, a cockpit volume, brightness of a central control screen, a steering wheel heating status, a steering wheel heating gear, and the driving mode.

In this embodiment of this application, before the vehicle enables the endurance mode, the first controller can obtain an energy consumption level of the vehicle, for example, an air conditioner status, an energy regeneration gear, an air suspension status, a vehicle speed limit, and a torque limit. After the vehicle exits the endurance mode, the first controller can control the vehicle to quickly restore to the energy consumption level existing before the endurance mode is enabled, that is, quickly restore the air conditioner status, the energy regeneration gear, the air suspension status, the vehicle speed limit, and the torque limit, to further improve driving experience of the user.

FIG. 10 is a schematic flowchart of another control method according to an embodiment of this application. A method 1000 may be applied to the carrier 100 in FIG. 1, and the method may include the following steps.

S1001: Obtain a first traveling speed of a vehicle.

S1002: Adjust the first traveling speed of the vehicle to a second traveling speed when the first traveling speed is greater than a first speed threshold.

The second traveling speed is less than the first speed threshold.

Optionally, adjusting the first traveling speed to the second traveling speed may be: informing, on a vehicle-mounted display, a user that a traveling speed of the vehicle is excessively high, and reminding the user to adjust an opening degree of an acceleration pedal to decelerate, to adjust the traveling speed of the vehicle to the second traveling speed.

Optionally, adjusting the first traveling speed to the second traveling speed may be: informing, on a vehicle-mounted display, a user that a traveling speed of the vehicle is excessively high, asking the user whether to agree to adjust the vehicle speed to the first traveling speed, and after obtaining consent of the user, a first controller controls the vehicle speed of the vehicle to be adjusted to the second traveling speed.

S1003: Enable an endurance mode.

For example, the first speed threshold is set to 80 km/h, and the first controller may control the endurance mode to be enabled when the traveling speed of the vehicle is less than 80 km/h.

In this embodiment of this application, when the vehicle speed of the vehicle is excessively high, the first controller may reduce the first traveling speed of the vehicle, to ensure that the vehicle safely enters the endurance mode.

In a possible implementation, the method further includes: prompting the user to reduce the first traveling speed.

A manner of prompting the user to reduce the second traveling speed may be: displaying a prompt box on the vehicle-mounted display to prompt the user to reduce the vehicle speed, or prompting, through voice from a vehicle-mounted speaker, the user to reduce the vehicle speed.

In this embodiment of this application, when the vehicle speed is excessively high, the first controller can prompt the user to reduce the traveling speed of the vehicle, so that the vehicle can safely enter the endurance mode.

Embodiments of this application further provide an apparatus for implementing any one of the foregoing methods. For example, an apparatus including units (or means) configured to implement steps performed by the vehicle in any one of the foregoing methods is provided.

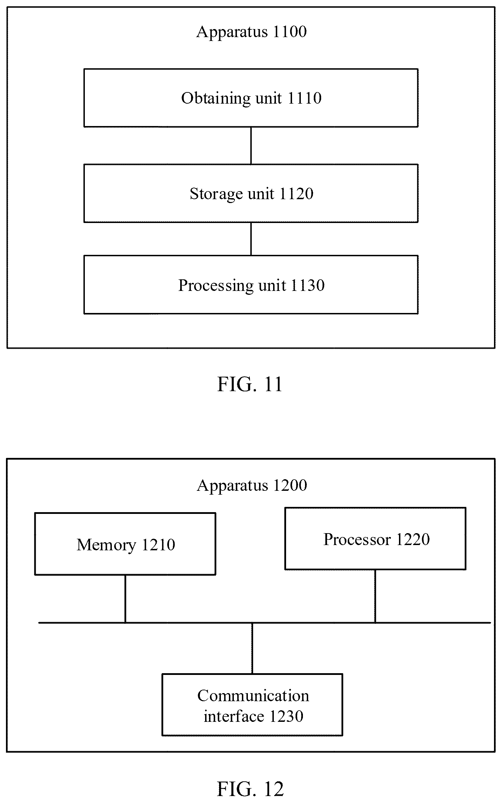

FIG. 11 is a diagram of a control apparatus 1100 according to an embodiment of this application. The apparatus 1100 may be used in the carrier 100 in FIG. 1.

The apparatus 1100 may include an obtaining unit 1110, a storage unit 1120, and a processing unit 1130. The obtaining unit 1110 is configured to obtain instructions and/or data. The obtaining unit 1110 may also be referred to as a communication interface or a communication unit. The storage unit 1120 is configured to store data. The processing unit 1130 is configured to process data. The processing unit 1130 may read the instructions and/or the data in the storage unit 1120, so that the apparatus 1100 implements the foregoing method embodiments.

In a design, the apparatus 1100 may be configured to perform an action performed by the vehicle or the first controller in the method 300.

In a possible implementation, the apparatus 1100 includes: the obtaining unit 1110, configured to: obtain first configuration information, where the first configuration information is information obtained based on an operation of enabling or disabling a first function of the vehicle by a user; and the processing unit 1130, configured to: control a working status of the first controller based on the first configuration information, where the working status includes a first working state and a second working state, the first controller enables the first function in the first working state, the first controller disables the first function in the second working state, and power consumption of the vehicle existing when the first controller is in the second working state is lower than power consumption of the vehicle existing when the first controller is in the first working state.

In a possible implementation, the processing unit 1130 is further configured to: when a gear of the vehicle is a reverse gear, switch the first controller from the second working state to a third working state, where the first controller enables a reversing assistance function in the third working state.

In a possible implementation, the reversing assistance function includes at least one of the following: a reversing radar function, a panoramic view function, and a reversing view function.

In a possible implementation, the processing unit 1130 is further configured to inform the user that the reversing assistance function is enabled.

In a possible implementation, the processing unit 1130 is further configured to: when the gear of the vehicle is a parking gear, a neutral gear, or a drive gear, switch the first controller from the third working state to the second working state.

In a possible implementation, that the processing unit 1130 is further configured to determine that the gear of the vehicle is the parking gear or the drive gear includes: determining that duration in which the gear of the vehicle is the parking gear or the drive gear is greater than or equal to a first threshold; or determining that the gear of the vehicle is the parking gear or the drive gear, and a traveling speed of the vehicle is greater than or equal to a second threshold.

In a possible implementation, the processing unit 1130 is further configured to enable an endurance mode.

In a possible implementation, the first function includes an automatic driving function.

In a design, the apparatus 1100 may be configured to perform an action performed by the vehicle or the first controller in the method 900.

In a possible implementation, the apparatus includes: the obtaining unit 1110, configured to: obtain a first energy consumption level, where the first energy consumption level is an energy consumption level of the vehicle in a non-endurance mode, and the obtaining unit 1110 is further configured to: obtain a first instruction, where the first instruction instructs to enable an endurance mode; and the processing unit 1130, further configured to: adjust an energy consumption level of the vehicle from the first energy consumption level to a second energy consumption level in response to the first instruction, where the second energy consumption level is an energy consumption level of the vehicle in the endurance mode, and an energy consumption rate of the vehicle at the first energy consumption level is greater than an energy consumption rate of the vehicle at the second energy consumption level; the obtaining unit 1110 is further configured to: obtain a second instruction, where the second instruction instructs to exit the endurance mode; and the processing unit 1130 is further configured to adjust the energy consumption level of the vehicle to the first energy consumption level in response to the second instruction.

In a possible implementation, the processing unit 1130 is specifically configured to perform at least one of the following content: adjusting a second air conditioner mode to a first air conditioner mode, adjusting a second energy regeneration gear state to a first energy regeneration gear state, adjusting a second air suspension state to a first air suspension state, adjusting a second vehicle speed limit to a first vehicle speed limit, and adjusting a second torque limit to a first torque limit.

Optionally, the first energy consumption level or the second energy consumption level or both further include one or more of the following: an on/off state of an air conditioner, an air conditioner setting temperature, a seat heating switch status, a seat heating gear status, a seat ventilation gear status, an on/off state of a blower, a blower gear status, a status of an atmosphere light, a head-up display switch status, a cockpit volume, brightness of a central control screen, a steering wheel heating status, a steering wheel heating gear, and a driving mode.

In a possible implementation, that the second instruction instructs to exit the endurance mode includes: The second instruction instructs the processing unit 1130 to specifically exit the endurance mode when a state of charge of a battery of the vehicle is greater than or equal to a first battery level or a remaining range of the vehicle is greater than or equal to a first range.

In a design, the apparatus 1100 may be configured to perform an action performed by the vehicle or the first controller in the method 1000.

In a possible implementation, the apparatus 1100 includes: the obtaining unit 1110, configured to obtain a first traveling speed of the vehicle; and the processing unit 1130, configured to: adjust the first traveling speed of the vehicle to a second traveling speed when the first traveling speed is greater than a first speed threshold, where the second traveling speed is less than the first speed threshold, and the processing unit 1130 is further configured to enable an endurance mode.

In a possible implementation, the processing unit 1130 is further configured to prompt a user to reduce the first traveling speed.

It should be understood that division of units in the apparatus is merely logical function division. During actual implementation, all or some of the units may be integrated into one physical entity or may be physically separated. In addition, the unit in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or functions of units in the apparatus. The processor is, for example, a general-purpose processor such as a graphics processing unit (graphics processing unit, GPU) or a microprocessor, and the memory is a memory inside the apparatus or a memory outside the apparatus. Alternatively, the unit in the apparatus may be implemented in a form of hardware circuit, and the functions of some or all of the units may be implemented through a design of the hardware circuit. The hardware circuit may be understood as one or more processors. For example, in an implementation, the hardware circuit is an application-specific integrated circuit (application-specific integrated circuit, ASIC), and functions of some or all of the units are implemented through a design of a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the foregoing units. All of the units of the foregoing apparatus may be implemented in a form of software invoked by a processor, or may be implemented in a form of hardware circuit, or some of the units are implemented in a form of software invoked by a processor, and the remaining units are implemented in a form of hardware circuit.

Optionally, if the apparatus 1100 is located in the carrier, the processing unit 1130 may be the processor 131 shown in FIG. 1.

Optionally, the processing unit 1130 may be a processor 1220 in FIG. 12, the storage unit 1120 may be a memory 1210 in FIG. 12, and the obtaining unit 1110 may be a communication interface 1230 in FIG. 12.

FIG. 12 is a diagram of another control apparatus 1200 according to an embodiment of this application. The apparatus 1200 may be used in the carrier 100 in FIG. 1.

The control apparatus 1200 includes a memory 1210, a processor 1220, and a communication interface 1230. The memory 1210, the processor 1220, and the communication interface 1230 are connected through an internal connection path. The memory 1210 is configured to store instructions, and the processor 1220 is configured to execute the instructions stored in the memory 1210, to control the input/output interface 1230 to receive/send information. Optionally, the memory 1210 may be coupled to the processor 1220 through the interface, or may be integrated together with the processor 1220.

It should be noted that the communication interface 1230 uses a transceiver apparatus, for example, but not limited to a transceiver, to implement communication with another device or a communication network. The communication interface 1230 may further include an input/output interface (input/output interface).

The processor 1220 stores one or more computer programs, and the one or more computer programs include instructions. When the instructions are run by the processor 1220, the control apparatus 1200 is enabled to perform the control method in the foregoing embodiments.

In an implementation process, steps in the foregoing methods can be implemented by using a hardware integrated logic circuit in the processor 1220, or by using instructions in a form of software. The method disclosed with reference to embodiments of this application may be directly performed and completed by a hardware processor, or performed and completed by a combination of hardware and software modules in a processor. The software module may be located in a mature storage medium in the art, for example, a random access memory, a flash memory, a read-only memory, a programmable read-only memory, an electrically erasable programmable memory, or a register. The storage medium is located in the memory 1210, and the processor 1220 reads information in the memory 1210 and completes the steps in the foregoing methods in combination with hardware of the processor 1220. To avoid repetition, details are not described herein again.

Optionally, the apparatus 1100 or the apparatus 1200 may be located in the carrier 100 in FIG. 1.

Optionally, the apparatus 1100 or the apparatus 1200 may be the computing platform 130 in the carrier in FIG. 1.

An embodiment of this application further provides a computer-readable medium. The computer-readable medium stores program code. When the computer program code is run on a computer, the computer is enabled to perform any one of the methods in FIG. 3 to FIG. 10.

An embodiment of this application further provides a computer program product. The computer product includes a computer program. When the computer program is run, a computer is enabled to perform any one of the methods in FIG. 3 to FIG. 10.

An embodiment of this application further provides a chip, including at least one processor and a memory. The at least one processor is coupled to the memory, and is configured to read and execute instructions in the memory, to perform any one of the methods in FIG. 3 to FIG. 10.

An embodiment of this application further provides an intelligent vehicle, including at least one processor and a memory. The at least one processor is coupled to the memory, and is configured to read and execute instructions in the memory, to perform any one of the methods in FIG. 3 to FIG. 10.

An embodiment of this application further provides an intelligent vehicle, including any control apparatus in FIG. 11 or FIG. 12.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus and method may be implemented in other manners. For example, the described apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may or may not be physical units, to be specific, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or a part contributing to a conventional technology, or some of the technical solutions may be implemented in a form of software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

In embodiments of this application, the terms such as "example" or "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "relevant (corresponding, relevant)" and "corresponding (corresponding)" may sometimes be interchangeably used. It should be noted that meanings expressed by the two words are consistent when a difference between the two words is not emphasized.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, wherein the method comprises:
obtaining first configuration information, wherein the first configuration information is information obtained based on an operation of enabling or disabling a first function of a vehicle by a user; and
controlling a working status of a first controller based on the first configuration information, wherein the working status comprises a first working state and a second working state, the first controller enables the first function in the first working state, the first controller disables the first function in the second working state, and power consumption of the vehicle existing when the first controller is in the second working state is lower than power consumption of the vehicle existing when the first controller is in the first working state.

2. The method according to claim 1, wherein the method further comprises:
when a gear of the vehicle is a reverse gear, switching the first controller from the second working state to a third working state, wherein the first controller enables a reversing assistance function in the third working state.

3. The method according to claim 2, wherein the reversing assistance function comprises at least one of the following: a reversing radar function, a panoramic view function, and a reversing view function.

4. The method according to claim 2 or 3, wherein the method further comprises:
informing the user that the reversing assistance function is enabled.

5. The method according to any one of claims 2 to 4, wherein the method further comprises:
when the gear of the vehicle is a parking gear, a neutral gear, or a drive gear, switching the first controller from the third working state to the second working state.

6. The method according to claim 5, wherein the method further comprises: determining that the gear of the vehicle is the parking gear or the drive gear comprises:
determining that duration in which the gear of the vehicle is the parking gear or the drive gear is greater than or equal to a first threshold; or determining that the gear of the vehicle is the parking gear or the drive gear, and a traveling speed of the vehicle is greater than or equal to a second threshold.

7. The method according to any one of claims 1 to 6, wherein before the obtaining first configuration information, the method further comprises: enabling an endurance mode.

8. The method according to any one of claims 1 to 7, wherein the first function comprises an automatic driving function.

9. A control method, wherein the method comprises:
obtaining a first energy consumption level, wherein the first energy consumption level is an energy consumption level of the vehicle in a non-endurance mode;
obtaining a first instruction, wherein the first instruction instructs to enable an endurance mode;
adjusting an energy consumption level of the vehicle from the first energy consumption level to a second energy consumption level in response to the first instruction, wherein the second energy consumption level is an energy consumption level of the vehicle in the endurance mode, and an energy consumption rate of the vehicle at the first energy consumption level is greater than an energy consumption rate of the vehicle at the second energy consumption level;
obtaining a second instruction, wherein the second instruction instructs to exit the endurance mode; and
adjusting the energy consumption level of the vehicle to the first energy consumption level in response to the second instruction.

10. The method according to claim 9, wherein the adjusting the energy consumption level of the vehicle to the first energy consumption level comprises at least one of the following content:
adjusting a second air conditioner mode to a first air conditioner mode, adjusting a second energy regeneration gear state to a first energy regeneration gear state, adjusting a second air suspension state to a first air suspension state, adjusting a second vehicle speed limit to a first vehicle speed limit, and adjusting a second torque limit to a first torque limit.

11. The method according to claim 9 or 10, wherein that the second instruction instructs to exit the endurance mode comprises: the second instruction instructs to exit the endurance mode when a state of charge of a battery of the vehicle is greater than or equal to a first battery level or a remaining range of the vehicle is greater than or equal to a first range.

12. A control method, wherein the method comprises:
obtaining a first traveling speed of a vehicle;
adjusting the first traveling speed of the vehicle to a second traveling speed when the first traveling speed is greater than a first speed threshold, wherein the second traveling speed is less than the first speed threshold; and
enabling an endurance mode.

13. The method according to claim 12, wherein the method further comprises:
prompting a user to reduce the first traveling speed.

14. A control apparatus, wherein the apparatus comprises:
an obtaining unit, configured to: obtain first configuration information, wherein the first configuration information is information obtained based on an operation of enabling or disabling a first function of a vehicle by a user; and
a processing unit, configured to: control a working status of a first controller based on the first configuration information, wherein the working status comprises a first working state and a second working state, the first controller enables the first function in the first working state, the first controller disables the first function in the second working state, and power consumption of the vehicle existing when the first controller is in the second working state is lower than power consumption of the vehicle existing when the first controller is in the first working state.

15. The apparatus according to claim 14, wherein
the processing unit is further configured to: when a gear of the vehicle is a reverse gear, switch the first controller from the second working state to a third working state, wherein the first controller enables a reversing assistance function in the third working state.

16. The apparatus according to claim 15, wherein the reversing assistance function comprises at least one of the following: a reversing radar function, a panoramic view function, and a reversing view function.

17. The apparatus according to claim 15 or 16, wherein
the processing unit is further configured to inform the user that the reversing assistance function is enabled.

18. The apparatus according to any one of claims 15 to 17, wherein
the processing unit is further configured to: when the gear of the vehicle is a parking gear, a neutral gear, or a drive gear, switch the first controller from the third working state to the second working state.

19. The apparatus according to claim 18, wherein
that the processing unit is further configured to determine that the gear of the vehicle is the parking gear or the drive gear comprises: determining that duration in which the gear of the vehicle is the parking gear or the drive gear is greater than or equal to a first threshold; or determining that the gear of the vehicle is the parking gear or the drive gear, and a traveling speed of the vehicle is greater than or equal to a second threshold.

20. The apparatus according to any one of claims 14 to 19, wherein
the processing unit is further configured to enable an endurance mode.

21. The apparatus according to any one of claims 14 to 20, wherein the first function comprises an automatic driving function.

22. A control apparatus, wherein the apparatus comprises:
an obtaining unit, configured to: obtain a first energy consumption level, wherein the first energy consumption level is an energy consumption level of the vehicle in a non-endurance mode, and
the obtaining unit is further configured to: obtain a first instruction, wherein the first instruction instructs to enable an endurance mode; and
the processing unit, further configured to: adjust an energy consumption level of the vehicle from the first energy consumption level to a second energy consumption level in response to the first instruction, wherein the second energy consumption level is an energy consumption level of the vehicle in the endurance mode, and an energy consumption rate of the vehicle at the first energy consumption level is greater than an energy consumption rate of the vehicle at the second energy consumption level;
the obtaining unit is further configured to: obtain a second instruction, wherein the second instruction instructs to exit the endurance mode; and
the processing unit is further configured to adjust the energy consumption level of the vehicle to the first energy consumption level in response to the second instruction.

23. The apparatus according to claim 22, wherein
the processing unit is specifically configured to perform at least one of the following content: adjusting a second air conditioner mode to a first air conditioner mode, adjusting a second energy regeneration gear state to a first energy regeneration gear state, adjusting a second air suspension state to a first air suspension state, adjusting a second vehicle speed limit to a first vehicle speed limit, and adjusting a second torque limit to a first torque limit.

24. The apparatus according to claim 22 or 23, wherein that the second instruction instructs to exit the endurance mode comprises: the second instruction instructs the processing unit to specifically exit the endurance mode when a state of charge of a battery of the vehicle is greater than or equal to a first battery level or a remaining range of the vehicle is greater than or equal to a first range.

25. A control apparatus, wherein the apparatus comprises:
an obtaining unit, configured to obtain a first traveling speed of a vehicle; and
a processing unit, configured to: adjust the first traveling speed of the vehicle to a second traveling speed when the first traveling speed is greater than a first speed threshold, wherein the second traveling speed is less than the first speed threshold, and
the processing unit is further configured to enable an endurance mode.

26. The apparatus according to claim 25, wherein
the processing unit is further configured to prompt a user to reduce the first traveling speed.

27. A control apparatus, comprising at least one processor and a memory, wherein the at least one processor is coupled to the memory, and is configured to read and execute instructions in the memory, to perform the method according to any one of claims 1 to 13.

28. A computer-readable medium, wherein the computer-readable medium stores program code, and when the computer program code is run on a computer, the computer is enabled to perform the method according to any one of claims 1 to 13.

29. A chip, comprising at least one processor and a memory, wherein the at least one processor is coupled to the memory, and is configured to read and execute instructions in the memory, to perform the method according to any one of claims 1 to 13.

30. A computer program product, wherein the computer product comprises a computer program, and when the computer program is run, a computer is enabled to perform the method according to any one of claims 1 to 13.

31. A vehicle, comprising at least one processor and a memory, wherein the at least one processor is coupled to the memory, and is configured to read and execute instructions in the memory, to perform the method according to any one of claims 1 to 13.

32. A vehicle, comprising the control apparatus according to any one of claims 14 to 27.
